(19) Europäisches Patentamt
European Patent Office
Office européen des brevets

(11) EP 4 706 376 A1

(12) **EUROPEAN PATENT APPLICATION**

(43) Date of publication:
**11.03.2026 Bulletin 2026/11**

(21) Application number: **24199405.2**

(22) Date of filing: **10.09.2024**

(51) International Patent Classification (IPC):
***A01G 7/04*** (2006.01) ***A01G 9/22*** (2006.01)
***A01G 9/24*** (2006.01)

(52) Cooperative Patent Classification (CPC):
**A01G 7/045; A01G 9/249**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Gardin Ltd**
**Abingdon, Oxfordshire OX14 4RY (GB)**

(72) Inventor: **GODDING, Julian**
**Bisley, GL6 7AN (GB)**

(74) Representative: **Gill Jennings & Every LLP**
**The Broadgate Tower**
**20 Primrose Street**
**London EC2A 2ES (GB)**

(54) **METHOD AND SYSTEM FOR CONTROLLING LIGHT CONDITIONS FOR PLAT GROWTH**

(57) A method of controlling light conditions for the growth of one or more plants grown in a setting in which said plants are exposed to sunlight is described, which comprises receiving a target in respect of photosynthetic activity of one or more plants over a predetermined interval. One or more chlorophyll fluorescence measurements of at least one of said plants are taken. A relationship between photosynthetic activity of the plant and photosynthetically active light intensity incident upon the plant is estimated based on the one or more chlorophyll fluorescence measurements. A solar forecast is obtained in respect of at least part of the predetermined interval. A light conditions plan in respect of the predetermined interval is generated for the one or more plants based on the target in respect of photosynthetic activity, the estimated relationship between photosynthetic activity of the plant and photosynthetically active light intensity incident upon the plant, and the solar forecast. One or more supplemental photosynthetically active light sources arranged to irradiate the one or more plants and/or one or more light shades arranged to selectively block a proportion of sunlight incident upon the one or more plants are controlled in accordance with the light conditions plan.

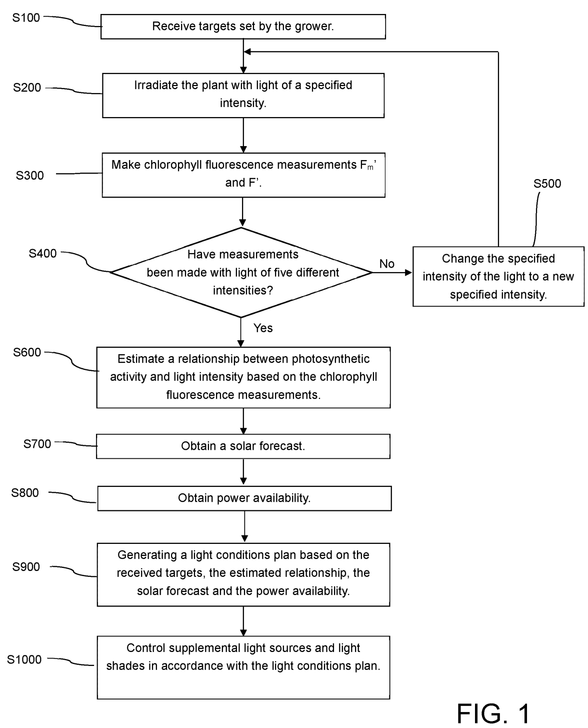


FIG. 1

EP 4 706 376 A1

## Description

## FIELD OF THE INVENTION

The invention relates to a method of controlling light conditions for plant growth suitable for use in commercial greenhouses, vertical farms and the like.

## BACKGROUND

In many commercial crop growth contexts, a supplemental lighting system is used, in which plants are exposed to sunlight, e.g. through the windows of a commercial greenhouse, and also exposed to light from a controllable photosynthetically active light source that is used to supplement the natural sunlight to compensate for periods of low light. Supplemental lighting systems may also use controllable shades to selectively block a proportion of sunlight incident upon the plants in order to prevent the plants from being damaged by excess light.

A plant's response to light intensity is generally measured by its electron transport rate. It is generally observed that a plant's electron transport rate increases linearly with increasing light intensity for low intensity values, but then begins to become limited by non-photochemical quenching. This relationship is often mapped on so-called light-response curves, which may be obtained by measuring changes in $CO_2$ assimilation with increasing light intensity.

Plants will adapt to their growth conditions, meaning that even the same variety of plant may require different lighting levels depending on their growth history. This can make it very difficult for growers to set an appropriate light level for a particular instance of a particular crop type and to maintain appropriate lighting conditions across the life of the crop.

Conventionally, indoor growers will use trial and error to discover a generic light 'recipe' for a particular plant species which typically gives a satisfactory yield and quality. Growers may then adjust light intensities for each growth cycle in an ad hoc manner to accelerate or decelerate growth based on judgements of the plant at a particular time.

A technique that uses chlorophyll fluorescence measurements in order to assist a grower with setting a suitable light intensity is disclosed in WO 2024/125899 A1. This discloses a technique that helps a grower achieve a good balance between plant growth and light intensity in recognition of the fact that light usage becomes less efficient at high intensities.

However, a problem exists with this method that growers often prefer to target specific goals with respect to plant growth, rather than targeting a certain photosynthetic efficiency. This is because crops are often grown to a pre-agreed order, and any additional yield may have little or no value. Thus, even if the additional yield is achieved at high efficiency, a grower may have preferred to achieve a lower yield while using fewer resources. The problem of meeting growth targets and minimising resource usage is further complicated in the context of supplemental lighting systems, in which controllable photosynthetically active light sources are being used only to supplement sunlight. It is therefore desirable to provide a method that enables a grower to control light conditions for plant growth in accordance with individual targets in such the context of supplemental lighting systems.

## SUMMARY OF INVENTION

In accordance with a first aspect of the invention, there is provided a method of controlling light conditions for the growth of one or more plants grown in a setting in which said plants are exposed to sunlight, the method comprising: receiving a target in respect of photosynthetic activity of one or more plants over a predetermined interval; taking one or more chlorophyll fluorescence measurements of at least one of said plants; estimating a relationship between photosynthetic activity of the plant and photosynthetically active light intensity incident upon the plant based on the one or more chlorophyll fluorescence measurements; obtaining a solar forecast in respect of at least part of the predetermined interval; generating a light conditions plan in respect of the predetermined interval for the one or more plants based on the target in respect of photosynthetic activity, the estimated relationship between photosynthetic activity of the plant and photosynthetically active light intensity incident upon the plant, and the solar forecast; and controlling one or more supplemental photosynthetically active light sources arranged to irradiate the one or more plants and/or one or more light shades arranged to selectively block a proportion of sunlight incident upon the one or more plants in accordance with the light conditions plan.

In this method, chlorophyll fluorescence measurements are used to estimate how a grower's target may be met while having regard for expected sunlight intensity. A light conditions plan is generated, which allows a grower to meet their target while reducing the use of supplemental light sources and/or while minimising damage to the crop through high or concentrated sunlight intensity.

The present method is preferably performed using a system that comprises a chlorophyll fluorescence sensor, and a controller configured to receive the target in respect of photosynthetic activity, the chlorophyll fluorescence measurements and the solar forecast, to generate the light conditions plan, and to control the photosynthetically active light sources and/or shading or otherwise output the light control plan for controlling the photosynthetically active light sources and/or shading. A suitable system for making fluorescence measurements and which may be used to perform the present method is disclosed in WO 2023/031612 A1.

It will be understood that, in the present context, photosynthetically active light may refer to light in the wavelength range 400 nm to 700 nm.

In the context of the present method, the target in respect of photosynthetic activity refers to any parameter for quantifying photosynthetic activity and may include, for example, a number or energy of electron-transfer reactions. Many commercial growers are accustomed to setting plant growth targets in terms of a daily light integral (DLI), which designates the number of photosynthetically active photons delivered to an area. However, a daily light integral is an inadequate means of setting a crop growth target as it does not take into account photosynthetic efficiency. For example, the same DLI may be achieved by delivering light of higher intensity over a shorter period of time, but since photosynthetic efficiency reduces at higher intensities, this will lead to less photosynthetic activity for the same DLI. Nonetheless, growers are familiar with this as a way of setting a plant growth target and may have experience of what yield is likely to result from a certain DLI. The present method may therefore involve converting a DLI, or other target, into a daily photosynthesis integral based on the chlorophyll fluorescence measurements. This may be done by estimating the amount of photosynthetic activity that would be achieved if the DLI, for example, were delivered with a constant intensity over the crop's light exposure hours based on an estimated photosynthesis for the crop, which may be derived using chlorophyll fluorescence measurements, as will be described in more detail below.

The method involves taking one or more chlorophyll fluorescence measurements of at least one of said plants in order to estimate a relationship between photosynthetic activity of the plant and photosynthetically active light intensity incident upon the plant. Chlorophyll fluorescence measurements can be used to estimate a relationship between photosynthetic activity of the plant and photosynthetically active light intensity incident upon the plant, i.e. photosynthetic efficiency, in view of the observed biological relationship:

$$\mathrm{E} \sim \mathrm{P} \times \mathrm{qe}$$

where E is the electron transport rate, P is the photosynthetic photon flux density (PPFD), i.e. a measure of intensity of photosynthetically active photons (having a wavelength of approximately 400-700 nm), and qe is the PSII operating efficiency: the quantum efficiency of PSII electron transport in the light. The above relationship approximation holds for dense crop canopies that can be assumed to intercept substantially all of the incident radiation, or can be modified by an interception factor that accounts for the total leaf area intercepting light per square meter, which could be estimated based on captured images of the crop. The PSII operating efficiency, qe, can be estimated using the chlorophyll measurements F' and $F_m$'. F' is the baseline fluorescence level of a light-adapted plant. $F_m$' is a measure of the maximal fluorescence of a plant in this light-adapted state, which is measured by exposing a light-adapted plant to a high intensity pulse and detecting the resulting chlorophyll fluorescence. The difference in these values is referred to as $F_q$', i.e.:

$$\mathrm{F_q}' = \mathrm{F_m}' - \mathrm{F}'$$

From these values, qe is estimated as:

$$\mathrm{qe} = \frac{\mathrm{F_q}'}{\mathrm{F_m}'}$$

Thus, from chlorophyll fluorescence measurements, for the present light intensity, electron transport rate may be estimated. In some cases, it may be possible to estimate a light response curve based on, for example, one such measurement and historical data for similar crops. However, as will be described below, it is generally preferable to make several chlorophyll fluorescence measurements at different light intensities in order to estimate a relationship between photosynthetic activity of the plant and photosynthetically active light intensity incident upon the plant. It should be noted that estimating the relationship between photosynthetic activity of the plant and photosynthetically active light intensity incident upon the plant may involve extrapolating and/or interpolating based on chlorophyll fluorescence measurements to obtain a light response curve based on the measurements.

Preferably, one or more of the chlorophyll fluorescence measurements used to estimate the relationship between photosynthetic activity of the plant and photosynthetically active light intensity incident upon the plant are made no earlier than 48 hours before the start of the predetermined interval, preferably no earlier than 24 hours before, more preferably no earlier than 12 hours before, more preferably no earlier than 6 hours before, most preferably no earlier than 2 hours before the start of the predetermined interval. Preferably at least 10%, or at least 25%, or at least 50% of the chlorophyll fluorescence measurements used to estimate the relationship between photosynthetic activity of the plant and photosynthetically active light intensity incident upon the plant are made no earlier than 48 hours before the start of the predetermined interval, preferably no earlier than 24 hours before, more preferably no earlier than 12 hours before, more preferably no earlier than 6 hours before, most preferably no earlier than 2 hours before the start of the predetermined interval. In particularly preferable embodiments, at least 50% of the chlorophyll fluorescence measurements used to estimate the relationship between photosynthetic activity of the plant and photosynthetically active light intensity incident upon the plant are made no earlier than 24 hours before the start of the predetermined interval. For example, some embodiments may use chlorophyll fluorescence measurements taken during the previous day of plant growth, using natural light variation over the course of the day to provide light variation for estimating the relationship. Other embodiments may implement a measurement period in which a series of measurements are made in relatively quick succession, e.g. over a period of less than one hour, with light variation induced by the supplemental light sources and/or light shades. In principle, using recent chlorophyll fluorescence measurements ensures that the estimated relationship accurately reflects the current state of the crop.

It will be noted that the method may involve taking chlorophyll fluorescence measurements for only one plant, even if there are a plurality of plants grown in the particular setting. In this case, the measurements may be assumed to be representative of the whole crop. In other cases, chlorophyll fluorescence measurements may be taken for several plants within a crop and an average used to determine how best to ensure that the crop as a whole meets the target.

The present method also involves obtaining a solar forecast, which may be a forecast that enables an estimate of photosynthetically active light that will irradiate the one or more plants over at least part of the predetermined interval. The solar forecast may be obtained via the internet. For example, the system that performs 'the present method may be connected to the internet to provide a controller that generates the light conditions plan with a solar forecast to use is said generating step.

Typically, the predetermined interval will be divided into a series of discrete control periods, and generating a light conditions plan will involve setting a target light intensity for each control period. The discrete control periods may be equal in length, or could vary depending on the time of day. Each control period may be at most a 30 minute period, for example. Generating the light conditions plan may typically comprise calculating a series of target light intensities spanning all or part of the predetermined interval that are estimated to meet the target in respect of photosynthetic activity. For example, based on the established relationship between photosynthetic activity of the plant and photosynthetically active light intensity incident upon the plant, it will be possible to estimate how much photosynthetic activity is achieved at any particular light intensity per unit of time. The solar forecast may be used to estimate the baseline photosynthetic activity achieved without intervention on this basis. Generating the light conditions plan may then involve identifying one or more periods in which intensity should be reduced by controlling of light shades and/or one or more periods in which intensity should be supplemented by photosynthetically active light sources in order to meet the target in respect of photosynthetic activity across the predetermined interval as a whole, while also accounting for any other criteria for the light conditions plan, as will be described further below.

In preferable embodiments, estimating the relationship between photosynthetic activity of the plant and photosynthetically active light intensity incident upon the plant comprises estimating a relationship between electron transport rate of the plant and photosynthetically active light intensity incident upon the plant. As indicated above, electron transport rate is a simple measure of photosynthetic activity that can be estimated based on the chlorophyll measurements F' and $F_m$'.

One important factor that may be accounted for in generating the light control plan is that plants may be damaged by light of high intensity. In particular, regular or sustained exposure to light of high intensity can cause the health or quality of the plant to deteriorate. Therefore, preferably, the method comprises estimating a photosynthetically active light intensity corresponding to a maximum photosynthetic activity of the plant, and wherein generating the light conditions plan comprises ensuring that a maximum target intensity for photosynthetically active light incident upon the one or more plants that does not exceed the estimated photosynthetically active light intensity corresponding to maximum photosynthetic activity. In this way, the plan may be generated so that the control of the one or more supplemental photosynthetically active light sources and/or the one or more light shades can be performed to achieve irradiation of no more than the maximum target intensity. Since sunlight can fluctuate over time, in some embodiments it is preferable to set a maximum target intensity for photosynthetically active light incident upon the one or more plants to be someway less than the photosynthetically active light intensity corresponding to a maximum photosynthetic activity of the plant, to prevent one of these fluctuations from temporarily taking the plant above its maximum capacity for light. Therefore, in some embodiments, generating the light conditions plan comprises ensuring that a maximum target intensity for photosynthetically active light incident upon the one or more plants that is less than the estimated photosynthetically active light intensity corresponding to maximum photosynthetic activity, preferably based on a predetermined relationship with the estimated photosynthetically active light intensity corresponding to maximum photosynthetic activity. For example, it may be that the maximum target intensity for photosynthetically active light incident upon the one or more plants is set to be 98% of the estimated photosynthetically active light intensity corresponding to maximum photosynthetic activity. In some embodiments in accordance with these techniques, estimating a photosynthetically active light intensity corresponding to a maximum photosynthetic activity of the plant comprises estimating a photosynthetically active light intensity corresponding to a maximum electron transport rate of the plant. Electron transport rate may be determined from light response curves calculated using the above equations for calculating electron transport rate.

Some preferred embodiments comprise estimating power availability for the one or more supplemental photosynthetically active light sources during the predetermined interval, wherein generating the light conditions plan is further based on the estimated power availability, and further comprises controlling the one or more supplemental photosynthetically active light sources in accordance with the light conditions plan. In this way, the light conditions plan can be generated based on an estimation of power availability for controlling the one or more light sources. In particular, this may be used to identify periods during the predetermined interval in which it is possible to supplement sunlight with light from the supplemental photosynthetically active light sources. In some embodiments, this may involve identifying periods when power is estimated to be available and when power is estimated to substantially not be available, e.g. from one or more power sources. For example, in a context in which a commercial greenhouse uses wind power from on-site wind turbines, or solar power from solar panels, to power the supplemental photosynthetically active light sources, then availability of power may be estimated based on a wind forecast.

In some embodiments, estimating power availability for the one or more supplemental photosynthetically active light sources during the predetermined interval may comprise estimating periods of high and low power demand during the predetermined interval, and wherein generating the light conditions plan is further based on the estimated periods of high and low power demand. In this way, plants may be grown using power in a more efficient and environmentally friendly way.

In some embodiments, estimating power availability for the one or more supplemental photosynthetically active light sources during the predetermined interval comprises estimating energy prices during the predetermined interval, and generating the light conditions plan may be further based on energy prices during the predetermined interval. Further preferably, generating the light conditions plan may comprise generating a light conditions plan that maximises photosynthetic activity of the one or more plants per unit of energy cost for powering the one or more supplemental photosynthetically active light sources. Energy prices may be estimated, for example, based on historical prices or based on an energy price tariff, and could also factor in estimated power availability from on-site renewable sources, such as on-site wind turbines, which would reduce the effective energy price per unit of energy. In this way, the plants may be grown in a more cost-effective way.

In other embodiments, generating the light conditions plan comprises generating a light conditions plan that maximises photosynthetic activity of the one or more plants per unit of energy used for powering the one or more supplemental photosynthetically active light sources. In this way, plants may be grown in a way that minimises energy usage and so is more environmentally friendly.

One issue with generating a light conditions plan based on at least a solar forecast is that uncertainty in the solar forecast generally increases further into the future. If a light conditions plan were to be executed that relied on a certain amount of sunlight in the latter part of the interval, which ended up being overestimated by the solar forecast, this may lead to the need to compensate using one or more supplemental photosynthetically active light sources by more than predicted in the latter part of the interval. Therefore, some embodiments may take advantage of the fact that the greatest degree of flexibility in meeting the target for photosynthetic activity exists at the start of the predetermined interval. For example, some embodiments may comprise generating a light conditions plan in which a biasing factor is applied to favour photosynthetic activity in an earlier part of the predetermined interval over photosynthetic activity in a later part of the predetermined interval. However, this is not essential.

Generally, the predetermined interval will be one approximately 24-hour interval, such as midnight to midnight or sunset to sunset, but could also be a set of hours specified by the grower. It is generally necessary to ensure that plants have a period in any 24 hour interval in which they are substantially not exposed to photosynthetically active light in order to maintain their health and quality. This period could be consistent from one interval to the next, e.g. approximately the same hours of the day in each 24-hour interval, or could vary from one 24-hour interval to the next. It should be noted here that a period in which plants are substantially not exposed to photosynthetically active light will generally be provided within the hours between dusk and dawn and would still be considered to be provided even if the plants are exposed to moonlight, for example. In view of the requirement for a period in which plants are substantially not exposed to photosynthetically active light, preferably the method comprises receiving a target maximum daily illumination period for the one or more plants, and wherein generating the light conditions plan is further based on the target maximum daily illumination period. The target maximum daily illumination period may also be referred to as the photoperiod, and is the period of time in a day that the plant is exposed to light. It is necessary for a grower to set this, since with the use of supplemental light sources, the photoperiod can be adjusted and is no longer determined by the hours of sunrise and sunset. In some examples, the light conditions plan may be generated such that there is substantially no sunlight (either by blackout shades or due to time of day) and no illumination by the one or more supplemental photosynthetically active light sources for a period of the predetermined interval that ensures that the target maximum daily illumination period is substantially not exceeded. This method may allow a certain amount of flexibility, such as the light conditions plan conforming to the target maximum daily illumination period to within a predetermined tolerance, for example to within a tolerance of 15 minutes.

A technique for estimating the relationship between photosynthetic activity of the plant and photosynthetically active light intensity incident upon the plant will now be set out in more detail. Preferably, taking one or more chlorophyll fluorescence measurements of at least one of said plants comprises: irradiating the plant with photosynthetically active light in at least two, preferably at least three, irradiation steps, wherein the intensity of photosynthetically active light in each irradiation step is different; determining the intensity of photosynthetically active light during each irradiation step; and measuring the chlorophyll fluorescence of the plant during each irradiation step; wherein estimating the relationship between photosynthetic activity of the plant and photosynthetically active light intensity incident upon the plant is based on the change in chlorophyll fluorescence measurements with the change in intensity of photosynthetically active light across the at least two irradiation steps. By observing chlorophyll fluorescence at least at two (preferably at least three, or at least four, or at least five) different intensities of photosynthetically active light, this may enable a light response curve to be more accurately estimated. As indicated above, preferably measuring the chlorophyll fluorescence of the plant during each irradiation step comprises measuring the baseline fluorescence level of the plant F' and measuring the maximal fluorescence of the plant $F_m$' during each irradiation step

Estimating a light response curve can also be performed by estimating a maximum photosynthetic activity of the plant. This is also particularly useful for ensuring that a maximum target intensity for photosynthetically active light incident upon the one or more plants that does not exceed the estimated photosynthetically active light intensity corresponding to maximum photosynthetic activity, as described above.

Preferably, taking one or more chlorophyll fluorescence measurements comprises using a measurement light source to emit substantially collimated or convergently focussed light, preferably light from a laser light source, to irradiate a measurement area of the plant with measurement light, and using an optical sensor to detect chlorophyll fluorescence from the measurement area. The term "substantially collimated" will be understood to encompass a light source with a beam divergence of 10° or less. More tightly collimated light will, of course, be preferred, and indeed, it will be preferred to have a beam divergence of 5° or less, more preferably 2° or less, even more preferably 1° or less, most preferably 0.1 ° or less. Commercially available lasers will typically have a beam divergence of much less than 0.1°. Such techniques integrate well in typical existing commercial growth settings and minimise disruption. Generally, it is preferred that a pulse-amplitude-modulation (PAM) fluorescence measurement device is used. Preferably the method comprises remotely measuring the chlorophyll fluorescence of the plant during each irradiation step. In these embodiments, preferably the optical sensor comprises an imaging optical sensor, such as a camera, configured to capture an image of the measurement area. This is preferred for a number of reasons. Firstly, this allows the position of the measurement area within the field of view of the sensor to be determined, which may allow for distance to the measurement area to be determined. Additionally, the images captured during the running of the light control method can be used to construct an image of the crop canopy and assess the health of the plants, which can be useful for other aspects of plant growth. While an imaging sensor is preferred, chlorophyll fluorescence could also be measured with a non-imaging system sensor. Indeed, a non-imaging sensor may be preferred in some contexts. For example, a non-imaging sensor may be able to achieve higher measurement frequencies, e.g. if it outputs an analogue signal. Suitable optical sensors may include silicon photodetectors and/or a photodiode.

While the chlorophyll fluorescence measurement could be made using a fixed measurement light source and optical sensor, i.e. configured to irradiate the same area of the plant on each occasion, it is preferable that the method can be performed on different areas of a plant or even on different plants within a crop. This would allow the method to compensate for plant growth or even repeat the method for different plants in a crop to base the light control method on the response of multiple plants. Therefore, preferably, the method comprises identifying a target measurement area and using an actuator to controllably direct the light from the measurement light source to irradiate the target measurement area.

While a light conditions plan may be generated in the manner above and then executed by controlling the one or more supplemental photosynthetically active light sources and/or the one or more light shades, it may be necessary to adjust the light conditions depending on various realities of executing the plan.

Some embodiments comprise, during controlling of the one or more supplemental photosynthetically active light sources and/or the one or more light shades in accordance with the light conditions plan, estimating the photosynthetically active light intensity incident upon the one or more plants, and adjusting the light conditions plan based on the estimated photosynthetically active light intensity. For example, if there is a sustained period in which sunlight intensity is higher than forecast, rather than shading the plants or reducing the light from the supplemental photosynthetically active light sources, it may be desirable to make use of this higher light intensity to achieve higher photosynthetic activity and adjust the light conditions plan in respect of a remaining part of the predetermined interval to provide lower photosynthetic activity such that the target in respect of photosynthetic activity is still met. The photosynthetically active light intensity incident upon the one or more plants may be estimated using an ambient light sensor and/or a sensor used to measure chlorophyll fluorescence.

The photosynthetically active light intensity incident upon the one or more plants may be estimated repeatedly, preferably periodically, or even continuously. Some embodiments may adjust the one or more supplemental photosynthetically active light sources and/or one or more light shades based on each estimation of photosynthetically active light intensity. Other embodiments may rely on the fact that sunlight will generally vary around the intensity estimated based on the solar forecast and may choose not to adjust the one or more supplemental photosynthetically active light sources and/or one or more light shades based on each estimation of photosynthetically active light intensity, instead evaluating a predetermined assessment period after it has passed and comparing the light intensity, and hence photosynthetic activity, with the light intensity targeted by the light conditions plan, and then adjusting the light conditions plan in respect of a remaining part of the predetermined interval based on the evaluation. For example, in some embodiments, adjusting the light conditions plan comprises estimating an amount of photosynthetic activity achieved during a first part of the predetermined interval based on the estimated photosynthetically active light intensity and the one or more chlorophyll fluorescence measurements, calculating a target in respect of remaining photosynthetic activity for a second part of the predetermined interval, and adjusting the light conditions plan based on the target in respect of remaining photosynthetic activity, the estimated relationship between photosynthetic activity of the plant and photosynthetically active light intensity incident upon the plant, and a solar forecast in respect of at least part of the second part of the predetermined interval.

It is also possible to adjust the light conditions plan based on further measurements of chlorophyll fluorescence. In particular, the method may comprise, during controlling of the one or more supplemental photosynthetically active light sources and/or the one or more light shades in accordance with the light conditions plan: taking one or more further chlorophyll fluorescence measurements of at least one of said plants, and adjusting the light conditions plan based on the further chlorophyll fluorescence measurements. For example, the measurements may be taken of $F_m$' and F'. In this way, the plan may be adjusted based on indications of how the plant is behaving during execution of the plan. In some embodiments, the further chlorophyll fluorescence measurements may be used to estimate $F_0$', which is the minimal fluorescence of a plant in a light-adapted state. A method for estimating $F_0$' is described in WO2024/100029 A1.

In some embodiments, taking the one or more chlorophyll fluorescence measurements of at least one of said plants comprises taking a plurality of chlorophyll fluorescence measurements while said at least one of said plants is exposed to photosynthetically active light of a first plurality of different intensities, and wherein taking one or more further chlorophyll fluorescence measurements of at least one of said plants comprises taking a plurality of further chlorophyll fluorescence measurements while said at least one of said plants is exposed to photosynthetically active light of a second plurality of different intensities, wherein the first plurality of different intensities comprises a greater range of intensities than the second plurality of different intensities and/or wherein the first plurality of different intensities comprises at least one intensity lower than any intensity in the second plurality of different intensities. In these embodiments, the chlorophyll fluorescence measurements used to estimate the relationship between photosynthetic activity of the plant and photosynthetically active light intensity incident upon the plant may be taken from the whole previous day's growing or during a dedicated measurement period at the start of a predetermined interval, e.g. at the start of the day, and so the relationship may be estimated using a wide range of different light intensities, and/or including low light intensities, which allows for this relationship to be estimated accurately. However, during execution of the light conditions plan using a wide range of different light intensities, and/or including low light intensities regularly throughout the predetermined interval will be disruptive to plant growth and negatively affect the health of the plant. Therefore, the further chlorophyll fluorescence measurements made during execution of the light conditions plan use less varied and/or higher intensities, which are less disruptive. While these may not be able to accurately re-estimate the relationship between photosynthetic activity of the plant and photosynthetically active light intensity incident upon the plant, they can nonetheless be compared with expectations or used to identify how small changes in light intensity are affecting the plant, in order to adjust the light conditions plan in a less disruptive manner.

Preferably, taking one or more further chlorophyll fluorescence measurements of at least one of said plants comprises taking a plurality of further chlorophyll fluorescence measurements while said at least one of said plants is exposed to photosynthetically active light of a plurality of different intensities, and wherein adjusting the light conditions plan based on the further chlorophyll fluorescence measurements comprises adjusting the light conditions plan based on the rate of change of the further chlorophyll fluorescence measurements with the change in intensity of the photosynthetically active light. These embodiments look at the way the chlorophyll fluorescence measurements change with light intensity in order to adjust the light conditions plan. For example, if electron transport rate is found not to be increasing with increasing light intensity, when an increase would be expected, this may indicate that the plant is at its maximum electron transport rate, and so it would be preferable to reduce light intensity to avoid damaging the plant. Some embodiments comprise estimating a photosynthetic efficiency at each of the plurality of different intensities, and estimating a measure of photochemical quenching and/or non-photochemical quenching at each of the plurality of different intensities, and wherein adjusting the light conditions plan is based on the rate at which the measure of photochemical quenching and/or non-photochemical quenching changes with photosynthetic efficiency over the plurality of different intensities. For example, an increase in non-photochemical quenching without any significant increase in photochemical quenching would be indicative of the plant being unable to make use of higher light intensities, and may suggest lowering the peak light intensity of the light conditions plan

In some embodiments, the one or more further chlorophyll fluorescence measurements comprise a plurality of sets of chlorophyll fluorescence measurements of a plant at a plurality of different measurement times, and further comprising estimating a first relationship between quantum yield of photosynthesis and a maximum efficiency of PSII photochemistry over the different measurement times based on the plurality of sets of chlorophyll fluorescence measurements and estimating a second relationship between the quantum yield of photosynthesis and a photochemical quenching coefficient over the different measurement times based on the plurality of sets of chlorophyll fluorescence measurements; and wherein adjusting the light conditions plan is based on the estimated first and second relationships. Quantum yield of photosynthesis, i.e. the ratio of the number of photons emitted to the number of photons absorbed, is affected by both light intensity and $CO_2$ availability, since it is affected by both photochemical and non-photochemical quenching processes. Photochemical quenching is the process by which absorbed photons are converted into chemical energy used to carry out photosynthesis. Non-photochemical quenching is the process by which absorbed photons are converted into heat. As photochemical quenching increases, quantum yield increases. As non-photochemical quenching increases, quantum yield decreases. Non-photochemical quenching is inversely proportional to maximum efficiency of PSII photochemistry and so as maximum efficiency of PSII photochemistry increases, so does quantum yield. Chlorophyll fluorescence measurements allow for estimation of quantum yield, photochemical quenching, and maximum efficiency of PSII photochemistry. Thus, the present preferred embodiment uses chlorophyll fluorescence measurements in order to observe how quantum yield increases with maximum efficiency of PSII photochemistry (light adapted) and with photochemical quenching. If it is observed that an increase in maximum efficiency of PSII photochemistry produces a stronger increase in quantum yield than a corresponding increase in photochemical quenching, this may be taken to indicate that the plant already has an excess of light and is thus $CO_2$ limited. On the other hand, if it is observed that an increase in photochemical quenching produces a stronger increase in quantum yield than a corresponding increase in maximum efficiency of PSII photochemistry, this may be taken to indicate that the plant has an excess of $CO_2$ and is thus light limited, i.e. has the capacity to take on more light for useful photochemistry. Being able to identify whether a plant is $CO_2$ limited or light limited is useful in the present context as it would allow the grower to avoid inefficient use of light. For example, in some embodiments, adjusting the light conditions plan comprises reducing photosynthetically active light intensity based on the first and second relationships indicating that the quantum yield of photosynthesis increases more rapidly with, or is more strongly positively correlated to, the maximum efficiency of PSII photochemistry than the photochemical quenching coefficient. In other words, the plan may be adjusted if it is indicated that the plant is $CO_2$ limited, since this indicates that excess light is being wasted at the current intensity.

In more detail, these preferred embodiments may comprise, during controlling of the one or more supplemental photosynthetically active light sources and/or the one or more light shades in accordance with the light conditions plan, taking a plurality of sets of chlorophyll fluorescence measurements of a plant at plurality of different measurement times; calculating a first parameter indicative of a quantum yield of photosynthesis of the plant at each measurement time based on the respective set of chlorophyll fluorescence measurements; calculating a second parameter indicative of a maximum efficiency of PSII photochemistry of the plant at a plurality of the measurement times based on the respective set of chlorophyll fluorescence measurements; calculating a third parameter indicative of a photochemical quenching coefficient of the plant at a plurality of the measurement times based on the respective set of chlorophyll fluorescence measurements; and, in a comparison step, ascertaining a first relationship between the first and second parameters indicative of how the quantum yields of photosynthesis vary with the maximum efficiencies of PSII photochemistry; ascertaining a second relationship between the first and third parameters indicative of how the quantum yields of photosynthesis vary with the photochemical quenching coefficients; and adjusting the light conditions plan based on the result of the comparison step.

In these preferred embodiments, parameters indicative of quantum yield, maximum efficiency of PSII photochemistry and photochemical quenching coefficient are calculated from the measurements for each of the relevant measurement times. The result will be that a plurality of first parameters that can be compared with a corresponding plurality of second parameters and compared with a corresponding plurality of third parameters. It will be appreciated that one way such parameters may be calculated is by estimating a quantum yield of photosynthesis of the plant at each measurement time based on the respective set of chlorophyll fluorescence measurements, estimating a maximum efficiency of PSII photochemistry of the plant at a plurality of the measurement times based on the respective set of chlorophyll fluorescence measurements, and estimating a photochemical quenching coefficient of the plant at a plurality of the measurement times based on the respective set of chlorophyll fluorescence measurements. Ways of estimating these values will be discussed below. However, it should also be noted that the present method does not require directly estimating these values.

A plurality of sets of chlorophyll fluorescence measurements of a plant are made at plurality of different measurement times. The sets of chlorophyll fluorescence measurements are preferably made by a chlorophyll fluorescence measurement device. By making sets of measurements at different times, this allows for photochemical and maximum efficiency of PSII photochemistry to passively change (e.g. with varying intensity in sunlight) or to be actively changed (e.g. by controlling the blinds or supplemental light sources to vary photosynthetically active light intensity) so that it can be observed how the changes in photochemical quenching and maximum efficiency of PSII photochemistry affect quantum yield. Each set of measurements should include chlorophyll fluorescence measurements sufficient to enable calculation of a respective first parameter indicative of quantum yield, since quantum yield needs to be tracked against both photochemical quenching and maximum efficiency of PSII photochemistry. In principle, some sets of measurements could only include chlorophyll fluorescence measurements sufficient to calculate respective second parameters for a maximum efficiency of PSII photochemistry or respective third parameters for a photochemical quenching coefficient, but not both; however, in practice, the method will generally comprise calculating a second parameter indicative of a maximum efficiency of PSII photochemistry of the plant at each measurement time and calculating a third parameter indicative of a photochemical quenching coefficient of the plant at each measurement time.

Another option for adjusting the light conditions plan is to do this as solar forecasts become more accurate for a latter part of the predetermined interval. Therefore, the method may comprise during controlling of the one or more supplemental photosynthetically active light sources and/or the one or more light shades in accordance with the light conditions plan, receiving an updated solar forecast in respect of at least part of the predetermined interval remaining; and adjusting the light conditions plan based on the updated solar forecast. This will typically be combined with estimating an amount of photosynthetic activity achieved during a first part of the predetermined interval, and calculating an amount of photosynthetic activity remaining for the part of the predetermined interval remaining in order to meet the target. However, in other embodiments, it may simply be assumed that the light conditions plan was executed correctly in a first part of the predetermined interval, and the adjustment performed based on how much photosynthetic activity is expected to be required for a part of the predetermined interval remaining. The adjustment may also be based on the other criteria used when generating the light conditions plan, such as power availability, either in their original or an updated form. Typically, the method may involve repeatedly, preferably periodically, obtaining an updated solar forecast in respect of at least part of the predetermined interval remaining and adjusting the light conditions plan. In this way, the light conditions plan can be continuously kept up to date.

When growing plants in a commercial setting, there are many variables that can affect plant growth and this can lead to plants in different areas being in different states. For example, some regions of a commercial greenhouse may be warmer or more humid than others, which affects plant growth. Advantageously, the present method can be used to help ensure plants hit the same growth targets in spite of these differences. In particular, preferably the method comprises a first one or more plants grown in a first zone and a second one or more plants grown in a second zone, wherein the target received in respect of photosynthetic activity is the same for the plants grown in the first and second zones, the method comprising: taking one or more chlorophyll fluorescence measurements of at least one of said plants in the first zone and taking one or more chlorophyll fluorescence measurements of at least one of said plants in the second zone; estimating, for each zone, a relationship between photosynthetic activity of the respective plant and photosynthetically active light intensity incident upon the respective plant based on the one or more respective chlorophyll fluorescence measurements; generating a different light conditions plan in respect of the predetermined interval for each zone based on the target in respect of photosynthetic activity, the respective estimated relationship between photosynthetic activity of the plant and photosynthetically active light intensity incident upon the plant, and the solar forecast; and controlling, for each zone, one or more supplemental photosynthetically active light sources arranged to irradiate the respective one or more plants and/or one or more light shades arranged to selectively block a proportion of sunlight incident upon the respective one or more plants in accordance with the respective light conditions plan. In this way, the same target can be accommodated for the different zones, taking into account for plants in each zone the differences in their photosynthetic efficiency resulting from their health. All of the above preferred features may be implemented when performing zone control in this way.

The above method has described execution of a light conditions plan over one predetermined interval, typically one approximately 24-hour interval. However, it will be appreciated that a light conditions plan will be required for each of a plurality of predetermined intervals, e.g. each subsequent approximately 24-hour interval. Therefore, preferably, the method comprises for at least one subsequent predetermined interval: taking one or more subsequent chlorophyll fluorescence measurements of at least one of said plants; estimating a new relationship between photosynthetic activity of the plant and photosynthetically active light intensity incident upon the plant based on the one or more subsequent chlorophyll fluorescence measurements; obtaining a solar forecast in respect of at least part of the subsequent predetermined interval; generating a light conditions plan in respect of the subsequent predetermined interval for the one or more plants based on either: a) the target received in respect of photosynthetic activity, wherein the target is a target in respect of photosynthetic activity of the one or more plants over each of a plurality of predetermined intervals; or b) a new target received in respect of photosynthetic activity of the one or more plants over the subsequent predetermined interval; and based on the new estimated relationship between photosynthetic activity of the plant and photosynthetically active light intensity incident upon the plant, and the solar forecast in respect of at least part of the subsequent predetermined interval; and controlling one or more supplemental photosynthetically active light sources arranged to irradiate the one or more plants and/or one or more light shades arranged to selectively block a proportion of sunlight incident upon the one or more plants in accordance with the light conditions plan in respect of the subsequent predetermined interval. It will be noted that the above steps may be performed to generate a light conditions plan based on the same target set for the first predetermined interval. Indeed, generally the grower will set a target, such as a DLI, which is intended to represent a target to be met each day. Therefore, in the case of option a), the method involves generating a light conditions plan to meet this same target, but taking into account any change in the relationship between photosynthetic activity of the plant and photosynthetically active light intensity incident upon the plant, which may change over time and with the change in health of the plant, and taking into account the different solar forecast in respect of this new predetermined interval. However, the target may also change over time, as reflected in option b). In particular, the grower may decide to change their target, or the method may have recommended or implemented a change in the target based on observations of execution of the light conditions plan over earlier predetermined intervals, as described above.

The new relationship between photosynthetic activity of the plant and photosynthetically active light intensity incident upon the plant is based on the one or more subsequent chlorophyll fluorescence measurements, which are one or more chlorophyll fluorescence measurements taken after those used to estimate the relationship for the earlier predetermined interval. In some embodiments, the one or more subsequent chlorophyll fluorescence measurements may be those that were taken during execution of the light conditions plan for that earlier predetermined interval. In other embodiments, the method may involve a dedicated measurement period around the start of the subsequent predetermined interval in which a series of measurements are made in relatively quick succession. In some embodiments, the method may use measurements from, for example, a rolling period of 48 hours, to estimate each new relationship between photosynthetic activity of the plant and photosynthetically active light intensity incident upon the plant, although preferably all measurements used to estimate said new relationship may be taken no earlier than the preceding 24 hour period to ensure the current status of the plant is accurately reflected.

As indicated above, when repeating the light conditions plan, it is preferable to obtain a new relationship between photosynthetic activity of the plant and photosynthetically active light intensity incident upon the plant. It is preferred to do this frequently, so that the light conditions plan always reflects the state of the plant. Preferably, the method comprises estimating a new relationship between photosynthetic activity of the plant and photosynthetically active light intensity incident upon the plant at least once every seven days, preferably at least once every three days, more preferably at least once every two days, most preferably at least once a day. Preferably, this should be estimated no more than once a day to avoid unduly stressing the plant by repeated intensive measurements.

In accordance with a second aspect of the present invention, there is provided a system for controlling light conditions for the growth of one or more plants grown in a setting in which said plants are exposed to sunlight, the system comprising: a chlorophyll fluorescence sensor arranged to take one or more chlorophyll fluorescence measurements at least one of said plants; one or more supplemental photosynthetically active light sources arranged to irradiate the one or more plants and/or one or more light shades arranged to selectively block a proportion of sunlight incident upon the one or more plants; and a controller configured to: receive a target in respect of photosynthetic activity of the one or more plants over a predetermined interval; receive the one or more chlorophyll fluorescence measurements from the chlorophyll fluorescence sensor; estimate a relationship between photosynthetic activity of the plant and photosynthetically active light intensity incident upon the plant based on the one or more chlorophyll fluorescence measurements; obtain a solar forecast in respect of at least part of the predetermined interval; generate a light conditions plan in respect of the predetermined interval for the one or more plants based on the target in respect of photosynthetic activity, the estimated relationship between photosynthetic activity of the plant and photosynthetically active light intensity incident upon the plant, and the solar forecast; and control the one or more supplemental photosynthetically active light sources and/or the one or more light shades in accordance with the light conditions plan.

This system according to the second aspect corresponds to a system for performing the method of the first aspect of the invention. It will therefore be understood that the system may be configured to perform any embodiment of the method described above.

## BRIEF DESCRIPTION OF DRAWINGS

The invention will now be described with reference to the accompanying Figures, of which:

Figure 1 is a flow diagram illustrating a first method of controlling light conditions for the growth of one or more plants;

Figure 2 is a schematic depiction of a system for implementing the method of Figure 1;

Figure 3 is a schematic depiction of a chlorophyll fluorescence measurement and control device suitable for use in the method of Figure 1;

Figure 4 is a graph illustrating a relationship between electron transport rate and light intensity;

Figure 5 is a graph illustrating a first light conditions plan created in accordance with the method of Figure 1;

Figure 6 is graph illustrating progress of the light conditions plan of Figure 5 in meeting growth targets;

Figure 7 is a graph illustrating a second light conditions plan created in accordance with the method of Figure 1;

Figure 8 is a flow diagram illustrating a first method of adjusting a light conditions plan; and

Figure 9 is a flow diagram illustrating a second method of adjusting a light conditions plan.

## DETAILED DESCRIPTION

A first example of a system and method will now be described with reference to Figures 1 to 7.

Figure 1 is a flow diagram illustrating the steps of the method that may be performed in the system illustrated in Figure 2. Figure 2 shows, schematically, a commercial greenhouse 100 set up to implement the method according to the invention. The greenhouse is growing a crop C comprising a plurality of plants. Installed above the crop in the greenhouse is a lighting control system, which comprises a chlorophyll fluorescence measurement and control device 1, a plurality of controllable photosynthetically active lights 110a, 110b, and a plurality of adjustable shades 120a, 120b. The chlorophyll fluorescence measurement and control device 1 is connected to the lights 110a, 110b and the shades 120a, 120b by control lines 130 for transmitting control signals.

Figure 3 shows the chlorophyll fluorescence measurement and control device 1 in more detail. The device 1 comprises a dome-shaped housing 10, which encloses a laser 20 and a camera or non-imaging optical sensor 30 mounted on a support 40. The support is connected to an actuator 50, which moves the support 40 within the housing 10 so as to change the direction in which the laser 20 and optical sensor 30 are pointed. The housing also encloses a controller 60, which controls the operation of the lighting control system. As shown in Figure 3, the dome-shaped housing 10 is mounted by its substantially flat base over a crop C of plants being grown in an area below, so that the dome part of the housing projects downwards. In this arrangement, the support 40 is manoeuvred by the actuator 50 to point the laser 20 and optical sensor 30 at a target in the crop C below. The laser 20 irradiates a measurement area 21 with light and is controlled by the controller 60 to emit a saturation or measurement pulse in accordance with the type of measurement being made. Further details of the structure of the device 1 and its operation in making chlorophyll fluorescence measurements may be found in WO 2024/125899 A1 and WO 2023/031612 A1. In the present system, the controller 60 is wirelessly connected to a network (not shown), through which the controller 60 may access the internet and also receive data from a grower's personal electronic device, such as a PC or mobile phone.

In step S100 of the method, the controller 60 of the chlorophyll fluorescence measurement and control device 1 receives targets set by the grower in respect of each predetermined interval, which may be an interval of approximately 24 hours. These targets include a target in respect of photosynthetic activity of the crop and may also include a target maximum daily illumination period. The target in respect of photosynthetic activity of the crop may be a daily photosynthesis integral, which may be an amount of electron transfer to be achieved over the 24-hour period per unit area of crop. Since growers are typically not accustomed to setting growth targets in terms of photosynthetic activity, the target could instead by a daily light integral in units of mol per meter squared per day, which the system may then convert into a target in terms of electron transfer, as will be discussed further below. The target maximum daily illumination period may specify, for example, that the crop should have no more than 18 hours light exposure per day.

Next, in order to generate a light control plan in accordance with these targets, the chlorophyll fluorescence measurement and control device 1 must determine how the crop will respond to light. Thus, in step S200, the crop is irradiated with photosynthetically active light of a specified intensity. This light may be provided by either or both of the supplemental lights 110a, 110b and sunlight, adjusted by the shades 120a, 120b. In this embodiment, relatively low light intensities are used, and so the initial steps of the method may be performed before sunrise, so that the light intensity can be controlled solely by the supplemental light source, although this is not essential. For example, the light of the first predefined intensity may have a PPFD of 40 $\mu$mol $m^{-2}$ $s^{-1}$. The intensity of the light may be determined using a separate light sensor located in the crop (not shown) or using a camera located in the chlorophyll fluorescence measurement and control device 1, which may feedback into the control of the supplemental lights 110a, 110b and shades 120a, 120b to achieve the specified intensity.

Next, in step S300, the chlorophyll fluorescence measurement and control device 1 makes one or more chlorophyll fluorescence measurements of the crop while exposed to light of the specified intensity. This may comprise using the actuator 50 to aim the laser 20 and camera 30 at the crop, before taking an image of the crop with the camera 30 and using a computer vision technique to identify a leaf of one plant to target for chlorophyll fluorescence measurements. The actuator 50 may then be adjusted to aim the laser 20 and camera 30 at the target plant. Once the plant has had chance to adapt to the specified light intensity, the measurement area 21 is irradiated with light from the laser 20 and chlorophyll fluorescence from the measurement area within the field of view 31 of the camera 30 is detected by the camera 30. A bandpass filter 35 may be movable in front of the camera in order to selectively block out light outside of the range of chlorophyll fluorescence during this measurement phase. The laser 20 will need to be controlled in order to make the necessary chlorophyll fluorescence measurements. In order to take a measurement of the baseline fluorescence level F', the measurement area may be irradiated with a series of measurement pulses having a PPFD of about 6000 $\mu$mol $m^{-2}$ $s^{-1}$ and a duration of about 1 $\mu$s to 10 ms. The period between each pulse may be between 0.1 s to 10 s. The camera is used to detect chlorophyll fluorescence during this phase. This measurement is stored as the F' measurement. The plant is then irradiated with a saturation pulse from the laser in order to make an $F_m$' measurement. The saturation pulse lasts about 0.8 s. In the saturation pulse, the light is initially turned on to a first amplitude of around 8000 $\mu$mol $m^{-2}$ $s^{-1}$ and the light is pulsed to a higher amplitude of about 14000 $\mu$mol $m^{-2}$ $s^{-1}$. These pulses superimposed on the 8000 $\mu$mol $m^{-2}$ $s^{-1}$ pulse have a duration of about 1 $\mu$s to 10 ms and a period of about 10 ms to 100 ms. The camera is then used to detect the resulting chlorophyll fluorescence and this measurement is stored as the $F_m$' measurement. The chlorophyll fluorescence measurements are stored alongside the intensity of photosynthetically active light used when making this measurement, e.g. 40 $\mu$mol $m^{-2}$ $s^{-1}$ in this case.

In some embodiments, the chlorophyll fluorescence measurement and control device 1 may use the actuator 50 to aim the laser 20 and camera 30 at another plant and make another set of the same chlorophyll fluorescence measurements. This may be used to obtain an average of the crop. However, typically, a measurement from one plant will be representative of plants within the same environment.

Next, in step S400, the controller checks whether chlorophyll fluorescence measurements have been made with photosynthetically active light of five different intensities and, if not, the method proceeds to step S500 in which the intensity of light is changed to a new specified intensity. For example, the light intensities for the chlorophyll fluorescence measurements may be intended to be PPFDs of 40, 80, 120, 160, and 200 $\mu$mol $m^{-2}$ $s^{-1}$. Therefore, 80 $\mu$mol $m^{-2}$ $s^{-1}$ may be specified as the next light intensity. The reason that light intensities less than around 200 $\mu$mol $m^{-2}$ $s^{-1}$ may preferably be used is that the plant will generally be in a linear response of efficiency at light levels below this level.

The method then returns to step S200 and the crop is irradiated with light of the new intensity and allowed to adjust to the new light intensity. This typically takes between 2 and 10 minutes. Step S300 is then repeated, with the same measurements being made at the same one or more locations of the crop C at the new intensity, with the measurements being stored alongside the intensity. The process of checking the number of measurements in step S400, changing light intensity in step S500 and making new measurements is repeated until measurements have been made at five different intensities, whereupon the method proceeds to step S600. It should be noted that more or fewer than five different intensities may be used. More different intensities improves the accuracy of the light response curve being obtained, but requires more time and applies more stress to the plants.

In step S600 a relationship is estimated between photosynthetic activity and light intensity based on the chlorophyll fluorescence measurements. As explained above, electron transport rate can be estimated using the relationship:

$$E \sim P \times qe$$

where E is the electron transport rate, P is the photosynthetic photon flux density (PPFD), and qe is the PSII operating efficiency. As mentioned previously, for sparse crops, an interception factor may also be applied to reflect that only a proportion of light is incident upon plant leaf area. An interception factor may be calculated by capturing an image of the crop from above, e.g. using a camera of the control device 1, and assessing the proportion of crop area containing plant leaf. The parameter qe can be calculated as:

$$qe = \frac{F_m' - F'}{F_m'}$$

using the chlorophyl fluorescence measurements made in step S300 and, using the light intensity values stored alongside them, the electron transport rate can be estimated at each light intensity. In this case, with measurements made at light intensities of no more than 200 $\mu$mol $m^{-2}$ $s^{-1}$, the plant will exhibit a substantially linear response of photosynthetic efficiency. Thus, as indicated above, the PSII operating efficiency, qe, is a function of light intensity, i.e. P, and can be assumed to be:

$$qe(P) = mP + c$$

where m and c are linear parameters. Therefore, electron transport rate, E, as a function of light intensity, P, can be estimated as:

$$E(P) = mP^2 + cP$$

and from this the derivative of E(P) is:

$$E'(P) = 2mP + c$$

The quadratic turning point, i.e. corresponding to the maximum electron transport rate, and hence the maximum light required, $P_m$, is thus:

$$E'(P_m) = 0$$

and so:

$$P_m = -\frac{c}{2m}$$

Thus, we have a derivation for the light intensity $P_m$ required for the maximum electron transport rate $E_m$ using linear parameters c and m, which can be found using the regression of qe and P values obtained during steps S200 to S500. It should be noted that, in other embodiments, a wider range of light intensities may be used to map the whole of the light response curve directly. However, as this is time consuming, this will generally be preferred only when the measurements may be used from a previous day's plant growth, as will be discussed in more detail below.

From the above, a light response curve can be estimated, as illustrated in Figure 4. This graph illustrates how estimated electron transport rate, measured in $\mu$mol $m^{-2}$ $s^{-1}$, varies with PPFD, also measured in $\mu$mol $m^{-2}$ $s^{-1}$. As shown, electron transport rate increases substantially linearly with PPFD at low light intensities, before increasing more gradually at higher intensities, tending towards a maximum value $E_m$, which is illustrated on the graph. Estimating this light response curve allows the chlorophyll fluorescence measurement and control device 1 to estimate that electron transport rate that will be achieved at any particular light intensity.

In the event that the grower set a target in step S100 that is a daily light integral, then before moving onto step S700, the chlorophyll fluorescence measurement and control device 1 may convert this into a daily photosynthesis integral using the above relationship. In particular, the method may estimate the electron transport rate that would be achieved if the daily light integral were achieved using light of a single intensity value over the whole day, accounting also for any maximum illumination hours over the day.

The method then proceeds to step S700, in which the chlorophyll fluorescence measurement and control device 1 obtains a solar forecast for the coming 24-hour interval. The chlorophyll fluorescence measurement and control device 1 may obtain the solar forecast via the internet. The purpose here is for the control device 1 to gain an understanding of the likely light intensity the plants will be exposed to over the coming interval so that is can calculate adjustments to the predicted light conditions in order to meet the grower's targets.

Next, the method proceeds to step S800, in which the control device 1 obtains details of power availability for the coming 24-hour interval. The purpose here is for the control device 1 to be able to identify periods in which power is available to power the supplemental light sources 110a, 110b, and/or to identify periods of high and low power demand and/or high and low energy costs so that the supplemental light sources 110a, 110b can be used in an efficient way. The nature of the obtained power availability will depend on the grower's location and circumstances. For example, a grower that has its own solar or wind power generators at its facility may estimate power availability based on the solar forecast or a wind forecast, obtained over the internet, estimating periods in which power is and is not available and a likely amount of power available. A grower connected to the grid may obtain an estimate of power demand and/or energy prices. For example, a grower that sources power from the grid on a real-time pricing tariff may estimate periods of high and low demand, for example based on historical data obtained over the internet and/or based on estimates of supply of renewable energy, such as solar or wind power, in order to identify periods of expected low demand, during which it will be more efficient to use the supplemental light sources. Alternatively, a grower that sources power from the grid on fixed peak and off-peak tariffs may estimate energy prices during the predetermined interval based on their peak and off-peak rates.

In step S900, the control device 1 generates a light conditions plan based on the target received in step S100, the relationship between photosynthetic activity and light intensity estimated in step S600, the solar forecast obtained in step S700 and the power availability data obtained in step S800. A first example light conditions plan is illustrated in Figure 5.

Figure 5 is a graph of light intensity over time for a period of 24 hours. In this graph, the predetermined interval, i.e. the 24-hour period, is divided into 1 hour blocks. The lines on the graph show PAR_max, which is the target maximum light intensity of photosynethically active radiation (PAR) in $\mu$mol $m^{-2}$ $s^{-1}$ for the plants being grown, PAR_sun, which is the forecast light intensity in $\mu$mol $m^{-2}$ $s^{-1}$ for each hour of the predetermined interval, PAR_LED, which is the amount of light in $\mu$mol $m^{-2}$ $s^{-1}$ to be supplied by the supplemental light source in accordance with the light conditions plan, and PAR_total is the total light to be delivered to the plants each hour, in $\mu$mol $m^{-2}$ $s^{-1}$, which is made up of the sum of PAR_sun and PAR_LED in the present case (since no shading is performed).

The first step in generating the light conditions plan involves setting the hours in which the plants are going to be exposed to light. This is set based on the target maximum daily illumination period received in step S100 and will generally be set to be the same block of hours for the first and each subsequent day. In the present case, the target maximum daily illumination period is 18 hours and so the graph shows that hours 00:00 until 04:00 and 22:00 until 00:00 are set as dark hours in which the plant will not be exposed to light. This may be set to be any block of hours expected to receive no sunlight and/or may be set to correspond to hours in which electricity prices are higher.

As is evident from the graph of Figure 5, this shows a scenario in which the maximum electron transport rate of the plant is estimated, using the relationship obtained in step S600, to be achieved at light intensities of approximately 900 $\mu$mol $m^{-2}$ $s^{-1}$. Accordingly, PAR_max is a constant 900 $\mu$mol $m^{-2}$ $s^{-1}$ in each hour block. In this scenario, since the solar forecast, illustrated by PAR_sun, is not expected to reach or exceed 900 $\mu$mol $m^{-2}$ $s^{-1}$, no shading is required in this light conditions plan.

In the present scenario, it may be established that power is available at a low price or with low demand in the hours 04:00 until 18:00 and at a higher price or with high demand in the hours 18:00 until 22:00. In other embodiments, an estimated amount of renewable power available in each hour may be used. The controller will then assess the solar forecast, illustrated by PAR_sun, to estimate the amount of photosynthetic activity that will result from sunlight alone. This may be done by taking the expected light intensity in each hour from the solar forecast, and using the relationship established in S600 to estimate the electron transport that will be achieved as a result of that forecast light intensity. This estimated light intensity may then be compared to the target received in step S100. In the present scenario, a deficit is identified that requires use of the supplemental light sources.

The control device 1 then calculates the amount of additional light required to meet the target. It will be noted that, since the relationship established in S600 is non-linear, the amount of additional light required will vary depending on when that light is delivered, due to the presence of sunlight. It will generally be more efficient to deliver supplemental light when sunlight is low, since photosynthetic efficiency generally decreases with increasing light intensity. If the control device 1 is provided with expected energy costs in each hour block, then the control device may seek to maximise the electron transport achieved per unit of energy cost for powering the supplemental light sources. This can be achieved since the control device is able to estimate the electron transport rate achieved for a certain light intensity resulting from sunlight plus any supplemental light using the relationship established in S600. Alternatively, without energy costs, the control device may seek to maximise the electron transport achieved per unit of energy used in powering the supplemental light sources.

Figure 5 shows that the light conditions plan here involves delivering approximately 200 $\mu$mol $m^{-2}$ $s^{-1}$ of light in hours 04:00 until 08:00, which are the hours of no or lowest sunlight when energy prices are low. Sunlight is expected to increase from 06:00 until 16:00 and then decrease until 22:00. In the present scenario, since sunlight is expected to be lower in the hour block 21:00 until 22:00 than in the block 8:00 until 9:00, it is estimated that it is more cost effective to meet the target by implementing approximately 50 $\mu$mol $m^{-2}$ $s^{-1}$ in the block 21:00 until 22:00. Other embodiments may use different distributions of supplemental light depending on the way the controller assesses power availability. For example, other embodiments may simply identify each hour block as being associated with high or low demand, and restrict the use of supplemental light sources to low demand hours. Yet further embodiments may simply look to maximise photosynthetic activity of the plants per unit of energy used and so disregard energy prices or demand.

Figure 6 is a graph showing the electron transport rate estimated to be achieved in each hour block by the light conditions plan shown in Figure 5. Comparing with Figure 5, this shows the non-linear relationship between light intensity and resulting photosynthetic activity, since the peak light intensity in 15:00 until 16:00 in Figure 5 is more than triple the intensity of the supplemental light in hours 04:00 until 06:00, and yet the peak intensity results in an electron transport rate that is just over double that in hours 04:00 until 06:00. Figure 6 also shows how each hour block contributes to the target daily photosynthesis integral that is to be met by the end of the 24 hour interval.

Figure 7 shows a second example light conditions plan. Like Figure 5, this shows a graph of light intensity over time for a period of 24 hours. Again, the predetermined interval, i.e. the 24-hour period, is divided into 1 hour blocks. The lines on the graph again show PAR_max, PAR_sun, and PAR_LED, which are the same as before. The graph also shows PAR_total, which in this case is the total light to be delivered to the plants each hour, in $\mu$mol $m^{-2}$ $s^{-1}$, which is made up of the sum of PAR_sun and PAR_LED, but limited by shading such that PAR_total does not exceed PAR_max.

As before, the target maximum daily illumination period is 18 hours. In this case, because sunset is before 21:00, and power prices may be expected to be high in the period 21:00 until 00:00, the graph shows that hours 00:00 until 03:00 and 21:00 until 00:00 are set as dark hours in which the plant will not be exposed to light.

Figure 7, shows a scenario in which the maximum electron transport rate of the plant is estimated, using the relationship obtained in step S600, to be achieved at light intensities of approximately 410 $\mu$mol $m^{-2}$ $s^{-1}$. Accordingly, PAR_max is a constant 410 $\mu$mol $m^{-2}$ $s^{-1}$ in each hour block. In this scenario, the solar forecast, illustrated by PAR_sun, is expected to exceed 410 μmol $m^{-2}$ $s^{-1}$ in the hours 12:00 until 17:00 and so shading will be required in this light conditions plan to ensure PAR_total does not exceed PAR_max in these hours.

In the present scenario, it may be established that power is available at a low price or with low demand in the hours 00:00 until 07:00 and at a higher price or with high demand in the hours 07:00 until 00:00. The controller will then assess the solar forecast, illustrated by PAR_sun, to estimate the amount of photosynthetic activity that will result from sunlight alone, factoring the shading used to prevent light exceeding PAR_max. This may be done by taking the expected light intensity in each hour from the solar forecast, and using the relationship established in S600 to estimate the electron transport that will be achieved as a result of that forecast light intensity. This estimated light intensity may then be compared to the target received in step S100. Again, in the present scenario, a deficit is identified that requires use of the supplemental light sources. The control device 1 then calculates the amount of additional light required at during which hour blocks to meet the target. In this embodiment, the supplemental light sources may be used at maximum brightness in the hours of 03:00 until 07:00 when power is available with low demand or low cost. Since low light intensities are more efficient, the next best hour slots to use the supplemental light sources are 07:00 until 08:00, 08:00 until 09:00 and 20:00 until 21:00, in which PAR_sun is low. In the present embodiment, a biasing factor is applied to favour light exposure early in the day, and so the light conditions plan is created in which the block 07:00 until 08:00 has a higher intensity than 08:00 until 09:00 and 20:00 until 21:00. For example, the biasing factor may require that, in for all hour blocks that use supplemental lights, PAR_total is higher in each hour block in the first half of the photoperiod than in each hour block in the second half of the photoperiod. Thus, in this embodiment PAR_LED is used predominantly in hours 07:00 to 08:00 and 08:00 to 09:00 compared to block 20:00 to 21:00.

Finally, in step S1000, the control device 1 controls the supplemental light sources and light shades in accordance with the light conditions plan. This will generally involve adjusting the supplemental lights 110a, 110b and/or the shades 120a, 120b so that the plants receive the target light intensity. In general, either the supplemental lights will be on with the shades fully open to increase light intensity above sunlight intensity, or the supplemental lights will be off and the shades partially closed to reduce the intensity of the sunlight. Some embodiments may simply adjust the supplemental lights 110a, 110b and the shades 120a, 120b at the start of each 15 minute control period so that the light intensity is at the value specified in the light conditions plan. In some cases, the shades and lights may be set using feedback from an ambient light sensor or using the camera 30 in the control device 1 to achieve the specified light intensity from the light conditions plan. In other cases, the system may simply set the shades and lights based on the solar forecast light intensity for the coming 15 minute control period so that the expected light intensity, assuming the forecast is accurate, matches the specified light intensity from the light conditions plan, using calibrated values for the shades and the lights that are estimated to achieve the specified intensity based on the time of day and the sunlight intensity. In some embodiments, in step S1000 an ambient light sensor or camera 30 in the control device 1 may be repeatedly or continuously used to adjust the supplemental lights 110a, 110b and the shades 120a, 120b to keep the light intensity at the value specified in the light conditions plan. However, it may be preferred to avoid continuous or regular adjustments to the lights 110a, 110b and the shades, and so some embodiments may set the lights 110a, 110b and the shades at the start of a 15 minute control period and only adjust at the start of the next 15 minute control period.

While the above method describes generating a single light conditions plan for the entire crop located in the greenhouse, it will be appreciated that the chlorophyll fluorescence measurement and control device 1 may also control different zones of the greenhouse separately. In particular, the greenhouse 100 in Figure 2 may comprise two zones 100a, 100b, shown on the left and right side of Figure 2 respectively. The first zone 100a corresponds to one half of the greenhouse and has associated first supplemental lights 110a, and first shades 120a, while the second zone 100b has associated second supplemental lights 110b, and second shades 120b. In step S100, the grower inputs the same target for both zones 100a, 100b. In steps S200 and S300, the chlorophyll fluorescence measurement and control device 1 irradiates the plants in each zone 100a, 100b and makes a respective measurement of at least one plant in each zone, storing the measurement values and associated detected light intensities separately in memory. In step S600, the method may then estimate a relationship between photosynthetic activity and light intensity based on the chlorophyll fluorescence measurements for the corresponding zone. This may then be used in step S900 to generate a light conditions plan for the first zone 100a that is based on the estimated relationship between photosynthetic activity and light intensity for the plants in that zone, and to generate a light conditions plan for the second zone 100b that is based on the estimated relationship between photosynthetic activity and light intensity for the plants in that zone. This may therefore lead to different light conditions plans, that can be executed by separately controlling the first supplemental lights 110a, and first shades 120a in the first zone and the second supplemental lights 110b, and second shades 120b in the second zone. It will be noted that this may be achieved using only a single chlorophyll fluorescence measurement and control device 1 located in the centre of the greenhouse if the zones are small enough that the actuator 50 can point the laser 20 and camera 30 at plants approximately in the centre of both zones and obtain chlorophyll fluorescence measurements. In other embodiments, separate chlorophyll fluorescence measurement devices may be provided in each zone.

The above method described with respect to Figure 1 has illustrated how the chlorophyll fluorescence measurement and control device 1 may generate a light conditions plan and begin to execute that plan. However, several embodiments will now be described in which operation is monitored and the light control plan adjusted dynamically.

Figure 8 shows a first such method. This begins with step S1000 of controlling the supplemental light sources and light shades in accordance with the light conditions plan, which may be as described above with respect to Figure 1. In step S1100, regular measurements of light intensity on the plants are taken. Again, this may be done using an ambient light sensor (not shown) or the camera 30 in the chlorophyll fluorescence measurement and control device 1. These steps of controlling the supplemental light sources and light shades in accordance with the light conditions plan while regularly measuring and recording light intensity incident upon the plants may continue for a predetermined assessment period. The predetermined assessment period may be set to correspond to half of the target maximum daily illumination period so that the control device 1 performs one assessment and adjustment of the light conditions plan halfway through execution. Alternatively, the predetermined assessment period may be smaller, for example, every hour, or even down to 15 minutes so that the control device 1 assesses and adjusts after each light control period.

Once steps S1000 and S1100 have continued for the predetermined period, in step S1200, the control device 1 estimates the photosynthetic activity that has occurred in the plants so far based on the measured light intensity and the estimated relationship between photosynthetic activity and light intensity. In particular, this relationship, as illustrated in Figure 3, enables the control device to calculate the electron transport that has occurred over the elapsed part of the interval using the regularly measured light intensity values. The control device 1 will therefore be able to see whether light intensity was higher or lower than specified in the light conditions plan, and how this affected the electron transport compared to the amount that would have occurred if the conditions were exactly as planned.

In step S1300, the control device 1 obtains an updated solar forecast. The updated solar forecast may provide a more accurate estimate of light intensity for the remaining part of the interval than was provided at the start of the process in step S700. Although not shown, it may also be possible to obtain updated power availability date, especially where this factors in power available through renewable sources, such as solar and wind power, where an updated forecast may improve the prediction for the remaining interval.

In step S1400, the control device 1 adjusts the light conditions plan for the remaining interval. It does this based on the original targets set in S100, and the estimated photosynthetic activity that has occurred, as calculated in step S1200. This enables the control device to determine an amount of photosynthetic activity still required for the remaining interval. The control device may then use the estimated relationship from step S600, the updated solar forecast, and any power availability data to adjust the light conditions plan for the remaining part of the interval so that the amount of photosynthetic activity still required is achieved.

Then, in step S1500, the control device 1 controls the supplemental light sources and light shades in accordance with the adjusted light conditions plan, substantially as described above with respect to step S1000. Indeed, where more than one adjustment is to be made through the predetermined interval, instead of proceeding to step S1500, the method may return to step S1000 before repeating steps S1100 to S1400 to assess and adjust based on the next assessment period.

Another means of adjusting then light control plan will now be described with respect to Figure 9. Again, this method begins with step S1000 in which the supplemental light sources and light shades are being controlled accordance with the light conditions plan. The present technique provides a way of making further chlorophyll fluorescent measurements and adjusting the light conditions plan based on feedback from the plant. While it would be possible to repeat steps S200, S300, S400 and S500 in order to re-estimate the relationship illustrated in Figure 3, doing so generally requires large changes in light intensity, which disrupts plant growth. The following steps provide a less disruptive way of using chlorophyll fluorescence measurements to feedback into the control process.

In step S1110, chlorophyll fluorescence measurements of $F_m$' and F' are taken from a plant at the light intensity of the light conditions plan and the light intensity recorded. This may be performed in the same way described in step S300.

In step S1120, it is checked whether measurements have been made with light of five different intensities, and if not, the method proceeds to step S1130, in which light intensity is adjusted. Light intensity may be adjusted simply by waiting for natural variation in sunlight or by adjusting the shades or supplemental lights. Unlike the adjustments of step S500, here, smaller changes in light intensity may be used, such as a change from a PPFD of 400 $\mu mol\ m^{-2}\ s^{-1}$ to a PPFD of 420 $\mu mol\ m^{-2}\ s^{-1}$. The method then returns to step S1110, and this repeats until five different measurements have been made at different light intensities, with a range of at least 100 $\mu mol\ m^{-2}\ s^{-1}$, at which point the method proceeds to step S1140.

In step S1140, the control device 1 estimates a quantum yield of photosynthesis, a maximum efficiency of PSII photochemistry, and a photochemical quenching coefficient of the plant for each set of chlorophyll fluorescence measurements. The quantum yield of photosynthesis of the plant may be estimated as $\frac{F_m{'}-F{'}}{F_m{'}}$. A maximum efficiency of PSII photochemistry may be estimated for each set of measurements as $\frac{F_m{'}-F_0{'}}{F_m{'}}$. Since $F_0$' requires that measurement is made while there is no photosynthetically active light irradiating the plant, and this is usually not possible in a greenhouse and furthermore disruptive to the plant growth, $F_0$' may be estimated based on the chlorophyll fluorescence measurements taken in step S1110 and chlorophyll fluorescence measurements for the same plant taken during the previous night. Such a method is described in WO2024100029A1. In particular, $F_0$' may be estimated using the Oxborough and Baker equation:

$$F_0{'} = F_0/[\frac{F_v}{F_m} + \frac{F_0}{F_m{'}}]$$

Where $F_0$ is the minimal fluorescence of the plant in a dark-adapted state, $F_m$ is maximal fluorescence of the plant in the dark-adapted state, and $F_v$ is defined as:

$$F_v = F_m - F_0$$

A photochemical quenching coefficient may be estimated as $\frac{F_m{'}-F{'}}{F_m{'}-F_0{'}}$.

In step S1150, the control device 1 determines whether the plant appears to be $CO_2$ limited based on the above estimated values. To do this, the estimates are correlated. This involves taking logarithms of each estimated value, i.e. $\log\frac{F_m{'}-F{'}}{F_m{'}}$, $\log\frac{F_m{'}-F_0{'}}{F_m{'}}$, and $\log\frac{F_m{'}-F{'}}{F_m{'}-F_0{'}}$. Then a first Pearson correlation is performed correlating the $\log\frac{F_m{'}-F{'}}{F_m{'}}$ values with the $\log\frac{F_m{'}-F_0{'}}{F_m{'}}$ values. Finally, a second Pearson correlation is performed correlating the $\log\frac{F_m{'}-F{'}}{F_m{'}}$ values with the $\log\frac{F_m{'}-F{'}}{F_m{'}-F_0{'}}$ values.

The correlations calculated above allow for it to be determined whether a plant is light limited or $CO_2$ limited. In particular, it should now be determined from the data whether the estimated quantum yields of photosynthesis increase more rapidly with the estimated maximum efficiencies of PSII photochemistry than the estimated photochemical quenching coefficients. This can be determined by looking at the slopes of the Pearson correlations obtained above. If the estimated quantum yields of photosynthesis does increase more rapidly with the estimated maximum efficiencies of PSII photochemistry than the estimated photochemical quenching coefficients, then it is established that the plant is $CO_2$ limited. On the other hand, if the estimated quantum yields of photosynthesis does increase more rapidly with the estimated photochemical quenching coefficients than the estimated maximum efficiencies of PSII photochemistry, then it is established that the plant is light limited.

If the plant is established as being $CO_2$ limited, then it can be inferred that the plant has an excess of light for its environmental conditions and thus the currently set light intensity in the light conditions plan is too high. In the present case, since the method intends to allow a grower to meet growth targets rather than maximise growth, establishing that the plant is not $CO_2$ limited, i.e. it is light limited, will generally be a sign that the method is working as intended. Therefore, the method proceeds to step S1190 in which the light intensity is returned to that value specified in the light conditions plan, and the control device may wait a predetermined period, e.g. 30 minutes, before performing repeating the steps S1110 to S1150 to reassess the plant. Nonetheless, in some cases, it may be desirable to notify the grower that they may want to increase their growth targets if the plant is consistently identified as being light limited and/or is identified as being extremely light limited based on the estimated quantum yields of photosynthesis increasing much more rapidly with the estimated photochemical quenching coefficients than the estimated maximum efficiencies of PSII photochemistry.

In the case that step S1150 establishes that the plant is $CO_2$ limited, i.e. has an excess of light, the method proceeds to step S1160, in which the light conditions plan is adjusted to reduce the peak light intensity within the plan below the current light intensity specified in the plan, for example, by 5%. In order to compensate for this reduction, it will be necessary to increase the light intensity in other periods of the light conditions plan so that the target in respect of photosynthetic activity is still met over the predetermined interval. In case this cannot be achieved, the grower may be notified that their target is too high by a suitable indication being output by the control device 1.

Once the light conditions plan has been adjusted, the method proceeds to step S1170 in which it is checked whether the plant was significantly $CO_2$ limited for three consecutive adjustments. In particular, the plant may be considered significantly $CO_2$ limited by comparing the slope angle of the first and second Pearson correlations calculated above. If the slope angles differ by more than a threshold amount, then the plant may be considered significantly $CO_2$ limited. If this is not the case, then the method proceeds to step S1190, in which the light intensity is set based on the now adjusted light conditions plan, and a period of 30 minutes is allowed for the plant to adapt. If, however, three consecutive adjustments were made in which the plant was $CO_2$ limited and the difference between the slope angles of the Pearson correlations exceeded a threshold amount, then this indicates that indicates that the light level has been set far too high, and the grower may be notified that their target is too high by a suitable indication being output by the control device 1. This may take the form of a notification being sent to the grower's personal electronic device via a network connection to the control device, or via a display screen connected to the control device (not shown).

It will be appreciated that the methods described in relation to Figures 8 and 9 are compatible and may be run concurrently.

The above methods have described implementation of a light conditions plan for one 24-hour period, e.g. a first day, but it will be appreciated that this method may be repeated to create a new light conditions plan every day and this will now be described with respect to a second day.

The new light conditions plan for the second day may be generated generally in the same manner described with respect to Figure 1, using a solar forecast for the second day and power availability data for the second day in steps S700 and S800. In respect of step S100, the method may use a new target set by the grower for the second day, possibly adjusted based on feedback from the process described with respect to Figure 9, or may use the same target set by the grower for the first day.

While the second day could use the same relationship estimated in step S600 for the first day, and so skip steps S200 to S600, it will generally be preferred to estimate a new relationship between photosynthetic activity and light intensity periodically, preferably daily. In this respect, it should be noted that the method for the second day may also differ in that, in addition to or as well as performing steps S200 to S500 to take chlorophyll fluorescence measurements around the start of the next predetermined interval, the method may use chlorophyll fluorescence measurements obtained during execution of the light conditions plan during the previous day, e.g. the first day. For example, while executing the light conditions plan shown in Figure 5, the control device 1 may take chlorophyll fluorescence measurements $F_m$' and F' during each hour between 08:00 and 16:00, thereby providing subsequent chlorophyll fluorescence measurements at intensities ranging from about 100 $\mu$mol $m^{-2}$ $s^{-1}$ to about 700 $\mu$mol $m^{-2}$ $s^{-1}$. These measurements may also be obtained and stored as part of executing the method illustrated in Figure 9. Thus, in performing step S600 for the second day, the estimate may be based on chlorophyll fluorescence measurements taken during execution of the light conditions plan for the previous day and/or chlorophyll fluorescence measurements taken around the start of the predetermined interval for the second day.

This method may be repeated daily and, for example, each day, the estimate calculated in step S600 may be based on chlorophyll fluorescence measurements obtained during execution of the light conditions plan for the preceding day.

The invention may be further understood with reference to the following numbered clauses:

Clause 1. A method of controlling light conditions for the growth of one or more plants grown in a setting in which said plants are exposed to sunlight, the method comprising: receiving a target in respect of photosynthetic activity of one or more plants over a predetermined interval; taking one or more chlorophyll fluorescence measurements of at least one of said plants; estimating a relationship between photosynthetic activity of the plant and photosynthetically active light intensity incident upon the plant based on the one or more chlorophyll fluorescence measurements; obtaining a solar forecast in respect of at least part of the predetermined interval; generating a light conditions plan in respect of the predetermined interval for the one or more plants based on the target in respect of photosynthetic activity, the estimated relationship between photosynthetic activity of the plant and photosynthetically active light intensity incident upon the plant, and the solar forecast; and controlling one or more supplemental photosynthetically active light sources arranged to irradiate the one or more plants and/or one or more light shades arranged to selectively block a proportion of sunlight incident upon the one or more plants in accordance with the light conditions plan.

Clause 2. A method according to clause 1, wherein estimating the relationship between photosynthetic activity of the plant and photosynthetically active light intensity incident upon the plant comprises estimating a relationship between electron transport rate of the plant and photosynthetically active light intensity incident upon the plant.

Clause 3. A method according to clause 1 or clause 2, comprising estimating a photosynthetically active light intensity corresponding to a maximum photosynthetic activity of the plant, and wherein generating the light conditions plan comprises ensuring that a maximum target intensity for photosynthetically active light incident upon the one or more plants that does not exceed the estimated photosynthetically active light intensity corresponding to maximum photosynthetic activity.

Clause 4. A method according to any of the preceding clauses, comprising estimating power availability for the one or more supplemental photosynthetically active light sources during the predetermined interval, wherein generating the light conditions plan is further based on the estimated power availability, and comprising controlling the one or more supplemental photosynthetically active light sources in accordance with the light conditions plan.

Clause 5. A method according to clause 4, wherein estimating power availability for the one or more supplemental photosynthetically active light sources during the predetermined interval comprises estimating periods of high and low power demand during the predetermined interval, and wherein generating the light conditions plan is further based on the estimated periods of high and low power demand.

Clause 6. A method according to clause 4 or clause 5, wherein estimating power availability for the one or more supplemental photosynthetically active light sources during the predetermined interval comprises estimating energy prices during the predetermined interval, and wherein generating the light conditions plan is further based on energy prices during the predetermined interval.

Clause 7. A method according to clause 6, wherein generating the light conditions plan comprises generating a light conditions plan that maximises photosynthetic activity of the one or more plants per unit of energy cost for powering the one or more supplemental photosynthetically active light sources.

Clause 8. A method according to any of the preceding clauses, wherein generating the light conditions plan comprises generating a light conditions plan that maximises photosynthetic activity of the one or more plants per unit of energy used for powering the one or more supplemental photosynthetically active light sources.

Clause 9. A method according to any of the preceding clauses, wherein generating the light conditions plan comprises generating a light conditions plan in which a biasing factor is applied to favour photosynthetic activity in an earlier part of the predetermined interval over photosynthetic activity in a later part of the predetermined interval.

Clause 10. A method according to any of the preceding clauses, further comprising receiving a target maximum daily illumination period for the one or more plants, and wherein generating the light conditions plan is further based on the target maximum daily illumination period.

Clause 11. A method according to any of the preceding clauses, wherein taking one or more chlorophyll fluorescence measurements of at least one of said plants comprises: irradiating the plant with photosynthetically active light in at least two, preferably at least three, irradiation steps, wherein the intensity of photosynthetically active light in each irradiation step is different; determining the intensity of photosynthetically active light during each irradiation step; and measuring the chlorophyll fluorescence of the plant during each irradiation step; wherein estimating the relationship between photosynthetic activity of the plant and photosynthetically active light intensity incident upon the plant is based on the change in chlorophyll fluorescence measurements with the change in intensity of photosynthetically active light across the at least two irradiation steps.

Clause 12. A method according to any of the preceding clauses, wherein taking one or more chlorophyll fluorescence measurements comprises using a measurement light source to emit substantially collimated or convergently focussed light to irradiate a measurement area of the plant with measurement light, and using an optical sensor to detect chlorophyll fluorescence from the measurement area.

Clause 13. A method according to any of the preceding clauses, further comprising, during controlling of the one or more supplemental photosynthetically active light sources and/or the one or more light shades in accordance with the light conditions plan, estimating the photosynthetically active light intensity incident upon the one or more plants, and adjusting the light conditions plan based on the estimated photosynthetically active light intensity.

Clause 14. A method according to clause 13, wherein the photosynthetically active light intensity incident upon the one or more plants is estimated using an ambient light sensor and/or a sensor used to measure chlorophyll fluorescence.

Clause 15. A method according to clause 13 or clause 14, wherein adjusting the light conditions plan comprises estimating an amount of photosynthetic activity achieved during a first part of the predetermined interval based on the estimated photosynthetically active light intensity and the one or more chlorophyll fluorescence measurements, calculating a target in respect of remaining photosynthetic activity for a second part of the predetermined interval, and adjusting the light conditions plan based on the target in respect of remaining photosynthetic activity, the estimated relationship between photosynthetic activity of the plant and photosynthetically active light intensity incident upon the plant, and a solar forecast in respect of at least part of the second part of the predetermined interval.

Clause 16. A method according to any of the preceding clauses, further comprising, during controlling of the one or more supplemental photosynthetically active light sources and/or the one or more light shades in accordance with the light conditions plan: taking one or more further chlorophyll fluorescence measurements of at least one of said plants, and adjusting the light conditions plan based on the further chlorophyll fluorescence measurements.

Clause 17. A method according to clause 16, wherein taking the one or more chlorophyll fluorescence measurements of at least one of said plants comprises taking a plurality of chlorophyll fluorescence measurements while said at least one of said plants is exposed to photosynthetically active light of a first plurality of different intensities, and wherein taking one or more further chlorophyll fluorescence measurements of at least one of said plants comprises taking a plurality of further chlorophyll fluorescence measurements while said at least one of said plants is exposed to photosynthetically active light of a second plurality of different intensities, wherein the first plurality of different intensities comprises a greater range of intensities that the second plurality of different intensities and/or wherein the first plurality of different intensities comprises at least one intensity lower than any intensity in the second plurality of different intensities.

Clause 18. A method according to clause 16 or clause 17, wherein taking one or more further chlorophyll fluorescence measurements of at least one of said plants comprises taking a plurality of further chlorophyll fluorescence measurements while said at least one of said plants is exposed to photosynthetically active light of a plurality of different intensities, and wherein adjusting the light conditions plan based on the further chlorophyll fluorescence measurements comprises adjusting the light conditions plan based on the rate of change of the further chlorophyll fluorescence measurements with the change in intensity of the photosynthetically active light.

Clause 19. A method according to clause 18, comprising estimating a photosynthetic efficiency at each of the plurality of different intensities, and estimating a measure of photochemical quenching and/or non-photochemical quenching at each of the plurality of different intensities, and wherein adjusting the light conditions plan is based on the rate at which the measure of photochemical quenching and/or non-photochemical quenching changes with photosynthetic efficiency over the plurality of different intensities.

Clause 20. A method according to any of clauses 16 to 19, wherein the one or more further chlorophyll fluorescence measurements comprise a plurality of sets of chlorophyll fluorescence measurements of a plant at a plurality of different measurement times, and further comprising estimating a first relationship between quantum yield of photosynthesis and a maximum efficiency of PSII photochemistry over the different measurement times based on the plurality of sets of chlorophyll fluorescence measurements and estimating a second relationship between the quantum yield of photosynthesis and a photochemical quenching coefficient over the different measurement times based on the plurality of sets of chlorophyll fluorescence measurements; and wherein adjusting the light conditions plan is based on the estimated first and second relationships.

Clause 21. A method according to clause 20, wherein adjusting the light conditions plan comprises reducing photosynthetically active light intensity based on the first and second relationships indicating that the quantum yield of photosynthesis increases more rapidly with, or is more strongly positively correlated to, the maximum efficiency of PSII photochemistry than the photochemical quenching coefficient.

Clause 22. A method according to any of clauses 20 to 21, comprising repeating, in a plurality of instances, the steps of: taking a plurality of sets of chlorophyll fluorescence measurements of a plant at a plurality of different measurement times, and estimating the first and second relationships; and generating an indication that the target in respect of photosynthetic activity is too high based on the estimated first and second relationships across the plurality of instances, and preferably comprising outputting an indication that the target in respect of photosynthetic activity is too high based on the first and second relationships indicating repeatedly in the plurality of instances that the quantum yield of photosynthesis increases more rapidly with, or is more strongly positively correlated to, the maximum efficiency of PSII photochemistry than the photochemical quenching coefficient.

Clause 23. A method according to any of the preceding clauses, comprising during controlling of the one or more supplemental photosynthetically active light sources and/or the one or more light shades in accordance with the light conditions plan, receiving an updated solar forecast in respect of at least part of the predetermined interval remaining; and adjusting the light conditions plan based on the updated solar forecast.

Clause 24. A method according to any of the preceding clauses, comprising a first one or more plants grown in a first zone and a second one or more plants grown in a second zone, wherein the target received in respect of photosynthetic activity is the same for the plants grown in the first and second zones, the method comprising: taking one or more chlorophyll fluorescence measurements of at least one of said plants in the first zone and taking one or more chlorophyll fluorescence measurements of at least one of said plants in the second zone; estimating, for each zone, a relationship between photosynthetic activity of the respective plant and photosynthetically active light intensity incident upon the respective plant based on the one or more respective chlorophyll fluorescence measurements; generating a different light conditions plan in respect of the predetermined interval for each zone based on the target in respect of photosynthetic activity, the respective estimated relationship between photosynthetic activity of the plant and photosynthetically active light intensity incident upon the plant, and the solar forecast; and controlling, for each zone, one or more supplemental photosynthetically active light sources arranged to irradiate the respective one or more plants and/or one or more light shades arranged to selectively block a proportion of sunlight incident upon the respective one or more plants in accordance with the respective light conditions plan.

Clause 25. A method according to any of the preceding clauses, comprising, for at least one subsequent predetermined interval: taking one or more subsequent chlorophyll fluorescence measurements of at least one of said plants; estimating a new relationship between photosynthetic activity of the plant and photosynthetically active light intensity incident upon the plant based on the one or more subsequent chlorophyll fluorescence measurements; obtaining a solar forecast in respect of at least part of the subsequent predetermined interval; generating a light conditions plan in respect of the subsequent predetermined interval for the one or more plants based on either: a) the target received in respect of photosynthetic activity, wherein the target is a target in respect of photosynthetic activity of the one or more plants over each of a plurality of predetermined intervals; or b) a new target received in respect of photosynthetic activity of the one or more plants over the subsequent predetermined interval; and based on the new estimated relationship between photosynthetic activity of the plant and photosynthetically active light intensity incident upon the plant, and the solar forecast in respect of at least part of the subsequent predetermined interval; and controlling one or more supplemental photosynthetically active light sources arranged to irradiate the one or more plants and/or one or more light shades arranged to selectively block a proportion of sunlight incident upon the one or more plants in accordance with the light conditions plan in respect of the subsequent predetermined interval.

Clause 26. A method according to clause 25, comprising estimating a new relationship between photosynthetic activity of the plant and photosynthetically active light intensity incident upon the plant at least once every seven days, preferably at least once every three days, more preferably at least once every two days, most preferably at least once a day.

Clause 27. A system for controlling light conditions for the growth of one or more plants grown in a setting in which said plants are exposed to sunlight, the system comprising: a chlorophyll fluorescence sensor arranged to take one or more chlorophyll fluorescence measurements at least one of said plants; one or more supplemental photosynthetically active light sources arranged to irradiate the one or more plants and/or one or more light shades arranged to selectively block a proportion of sunlight incident upon the one or more plants; and a controller configured to: receive a target in respect of photosynthetic activity of the one or more plants over a predetermined interval; receive the one or more chlorophyll fluorescence measurements from the chlorophyll fluorescence sensor; estimate a relationship between photosynthetic activity of the plant and photosynthetically active light intensity incident upon the plant based on the one or more chlorophyll fluorescence measurements; obtain a solar forecast in respect of at least part of the predetermined interval; generate a light conditions plan in respect of the predetermined interval for the one or more plants based on the target in respect of photosynthetic activity, the estimated relationship between photosynthetic activity of the plant and photosynthetically active light intensity incident upon the plant, and the solar forecast; and control the one or more supplemental photosynthetically active light sources and/or the one or more light shades in accordance with the light conditions plan.

## Claims

1. A method of controlling light conditions for the growth of one or more plants grown in a setting in which said plants are exposed to sunlight, the method comprising:

   receiving a target in respect of photosynthetic activity of one or more plants over a predetermined interval;
   taking one or more chlorophyll fluorescence measurements of at least one of said plants;
   estimating a relationship between photosynthetic activity of the plant and photosynthetically active light intensity incident upon the plant based on the one or more chlorophyll fluorescence measurements;

obtaining a solar forecast in respect of at least part of the predetermined interval;

generating a light conditions plan in respect of the predetermined interval for the one or more plants based on the target in respect of photosynthetic activity, the estimated relationship between photosynthetic activity of the plant and photosynthetically active light intensity incident upon the plant, and the solar forecast; and

controlling one or more supplemental photosynthetically active light sources arranged to irradiate the one or more plants and/or one or more light shades arranged to selectively block a proportion of sunlight incident upon the one or more plants in accordance with the light conditions plan.

**2.** A method according to claim 1, comprising estimating a photosynthetically active light intensity corresponding to a maximum photosynthetic activity of the plant, and wherein generating the light conditions plan comprises ensuring that a maximum target intensity for photosynthetically active light incident upon the one or more plants that does not exceed the estimated photosynthetically active light intensity corresponding to maximum photosynthetic activity.

**3.** A method according to any of the preceding claims, comprising estimating power availability for the one or more supplemental photosynthetically active light sources during the predetermined interval, wherein generating the light conditions plan is further based on the estimated power availability, and comprising controlling the one or more supplemental photosynthetically active light sources in accordance with the light conditions plan.

**4.** A method according to claim 3, wherein estimating power availability for the one or more supplemental photosynthetically active light sources during the predetermined interval comprises estimating energy prices during the predetermined interval, and wherein generating the light conditions plan is further based on energy prices during the predetermined interval.

**5.** A method according to any of the preceding claims, wherein taking one or more chlorophyll fluorescence measurements of at least one of said plants comprises: irradiating the plant with photosynthetically active light in at least two, preferably at least three, irradiation steps, wherein the intensity of photosynthetically active light in each irradiation step is different; determining the intensity of photosynthetically active light during each irradiation step; and measuring the chlorophyll fluorescence of the plant during each irradiation step; wherein estimating the relationship between photosynthetic activity of the plant and photosynthetically active light intensity incident upon the plant is based on the change in chlorophyll fluorescence measurements with the change in intensity of photosynthetically active light across the at least two irradiation steps.

**6.** A method according to any of the preceding claims, further comprising, during controlling of the one or more supplemental photosynthetically active light sources and/or the one or more light shades in accordance with the light conditions plan, estimating the photosynthetically active light intensity incident upon the one or more plants, and adjusting the light conditions plan based on the estimated photosynthetically active light intensity.

**7.** A method according to claim 6, wherein adjusting the light conditions plan comprises estimating an amount of photosynthetic activity achieved during a first part of the predetermined interval based on the estimated photosynthetically active light intensity and the one or more chlorophyll fluorescence measurements, calculating a target in respect of remaining photosynthetic activity for a second part of the predetermined interval, and adjusting the light conditions plan based on the target in respect of remaining photosynthetic activity, the estimated relationship between photosynthetic activity of the plant and photosynthetically active light intensity incident upon the plant, and a solar forecast in respect of at least part of the second part of the predetermined interval.

**8.** A method according to any of the preceding claims, further comprising, during controlling of the one or more supplemental photosynthetically active light sources and/or the one or more light shades in accordance with the light conditions plan: taking one or more further chlorophyll fluorescence measurements of at least one of said plants, and adjusting the light conditions plan based on the further chlorophyll fluorescence measurements.

**9.** A method according to claim 8, wherein taking the one or more chlorophyll fluorescence measurements of at least one of said plants comprises taking a plurality of chlorophyll fluorescence measurements while said at least one of said plants is exposed to photosynthetically active light of a first plurality of different intensities, and wherein taking one or more further chlorophyll fluorescence measurements of at least one of said plants comprises taking a plurality of further chlorophyll fluorescence measurements while said at least one of said plants is exposed to photosynthetically active light of a second plurality of different intensities, wherein the first plurality of different intensities comprises a greater range of intensities that the second plurality of different intensities and/or wherein the first plurality of different intensities comprises at least one intensity lower than any intensity in the second plurality of different intensities.

**10.** A method according to claim 8 or claim 9, wherein taking one or more further chlorophyll fluorescence measurements of at least one of said plants comprises taking a plurality of further chlorophyll fluorescence measurements while said at least one of said plants is exposed to photosynthetically active light of a plurality of different intensities, and wherein adjusting the light conditions plan based on the further chlorophyll fluorescence measurements comprises adjusting the light conditions plan based on the rate of change of the further chlorophyll fluorescence measurements with the change in intensity of the photosynthetically active light.

**11.** A method according to claim 10, comprising estimating a photosynthetic efficiency at each of the plurality of different intensities, and estimating a measure of photochemical quenching and/or non-photochemical quenching at each of the plurality of different intensities, and wherein adjusting the light conditions plan is based on the rate at which the measure of photochemical quenching and/or non-photochemical quenching changes with photosynthetic efficiency over the plurality of different intensities.

**12.** A method according to any of the preceding claims, comprising during controlling of the one or more supplemental photosynthetically active light sources and/or the one or more light shades in accordance with the light conditions plan, receiving an updated solar forecast in respect of at least part of the predetermined interval remaining; and adjusting the light conditions plan based on the updated solar forecast.

**13.** A method according to any of the preceding claims, comprising, for at least one subsequent predetermined interval:

taking one or more subsequent chlorophyll fluorescence measurements of at least one of said plants;
estimating a new relationship between photosynthetic activity of the plant and photosynthetically active light intensity incident upon the plant based on the one or more subsequent chlorophyll fluorescence measurements;
obtaining a solar forecast in respect of at least part of the subsequent predetermined interval;
generating a light conditions plan in respect of the subsequent predetermined interval for the one or more plants based on either: a) the target received in respect of photosynthetic activity, wherein the target is a target in respect of photosynthetic activity of the one or more plants over each of a plurality of predetermined intervals; or b) a new target received in respect of photosynthetic activity of the one or more plants over the subsequent predetermined interval; and based on the new estimated relationship between photosynthetic activity of the plant and photosynthetically active light intensity incident upon the plant, and the solar forecast in respect of at least part of the subsequent predetermined interval; and
controlling one or more supplemental photosynthetically active light sources arranged to irradiate the one or more plants and/or one or more light shades arranged to selectively block a proportion of sunlight incident upon the one or more plants in accordance with the light conditions plan in respect of the subsequent predetermined interval.

**14.** A method according to claim 13, comprising estimating a new relationship between photosynthetic activity of the plant and photosynthetically active light intensity incident upon the plant at least once every seven days, preferably at least once every three days, more preferably at least once every two days, most preferably at least once a day.

**15.** A system for controlling light conditions for the growth of one or more plants grown in a setting in which said plants are exposed to sunlight, the system comprising:

a chlorophyll fluorescence sensor arranged to take one or more chlorophyll fluorescence measurements at least one of said plants;
one or more supplemental photosynthetically active light sources arranged to irradiate the one or more plants and/or one or more light shades arranged to selectively block a proportion of sunlight incident upon the one or more plants; and
a controller configured to:

receive a target in respect of photosynthetic activity of the one or more plants over a predetermined interval;
receive the one or more chlorophyll fluorescence measurements from the chlorophyll fluorescence sensor;
estimate a relationship between photosynthetic activity of the plant and photosynthetically active light intensity incident upon the plant based on the one or more chlorophyll fluorescence measurements;
obtain a solar forecast in respect of at least part of the predetermined interval;

generate a light conditions plan in respect of the predetermined interval for the one or more plants based on the target in respect of photosynthetic activity, the estimated relationship between photosynthetic activity of the plant and photosynthetically active light intensity incident upon the plant, and the solar forecast; and

control the one or more supplemental photosynthetically active light sources and/or the one or more light shades in accordance with the light conditions plan.

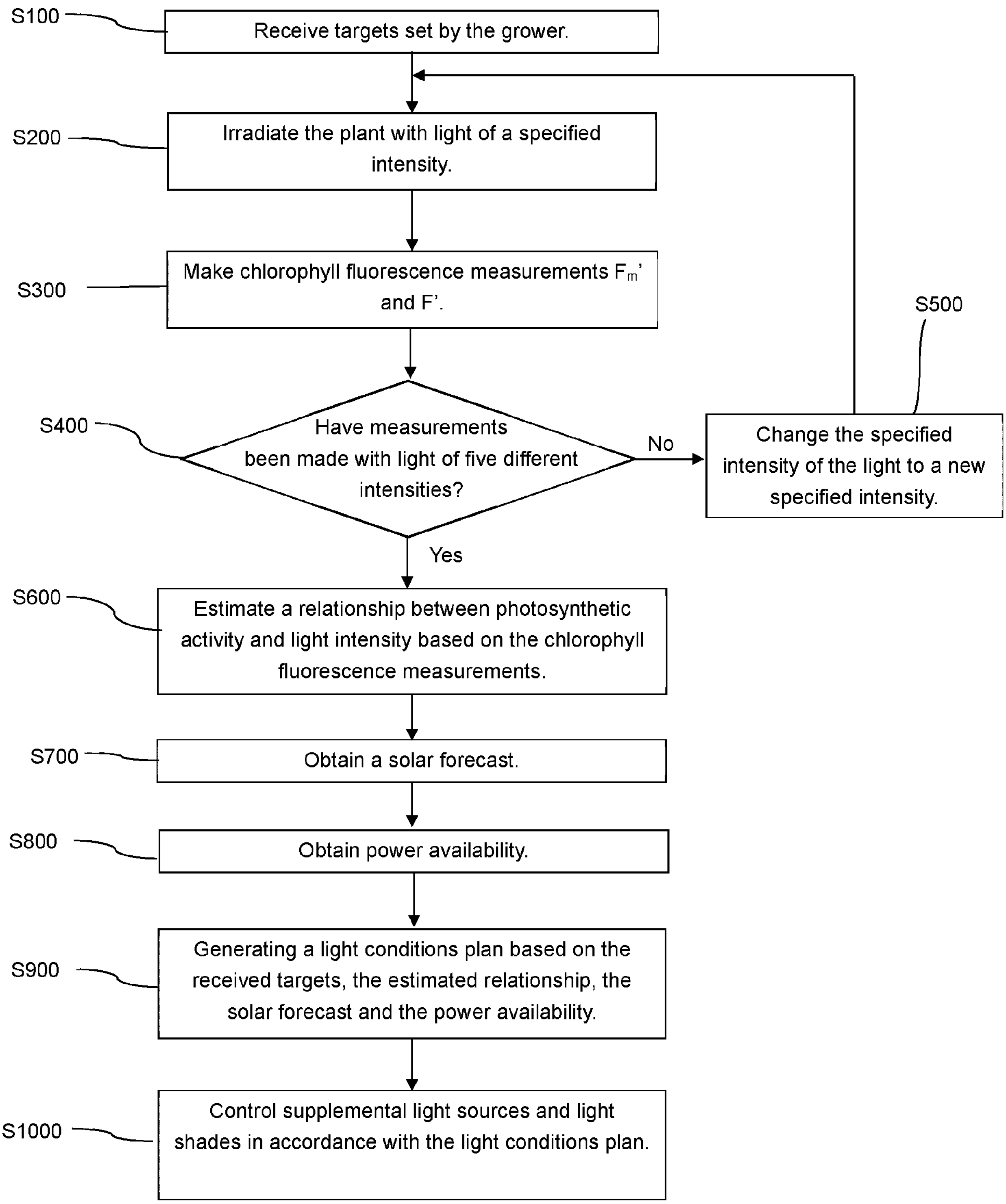
S100
Receive targets set by the grower.
S200
Irradiate the plant with light of a specified intensity.
S300
Make chlorophyll fluorescence measurements $F_m$' and F'.
S400
Have measurements been made with light of five different intensities?
No
Yes
S500
Change the specified intensity of the light to a new specified intensity.
S600
Estimate a relationship between photosynthetic activity and light intensity based on the chlorophyll fluorescence measurements.
S700
Obtain a solar forecast.
S800
Obtain power availability.
S900
Generating a light conditions plan based on the received targets, the estimated relationship, the solar forecast and the power availability.
S1000
Control supplemental light sources and light shades in accordance with the light conditions plan.

FIG. 1

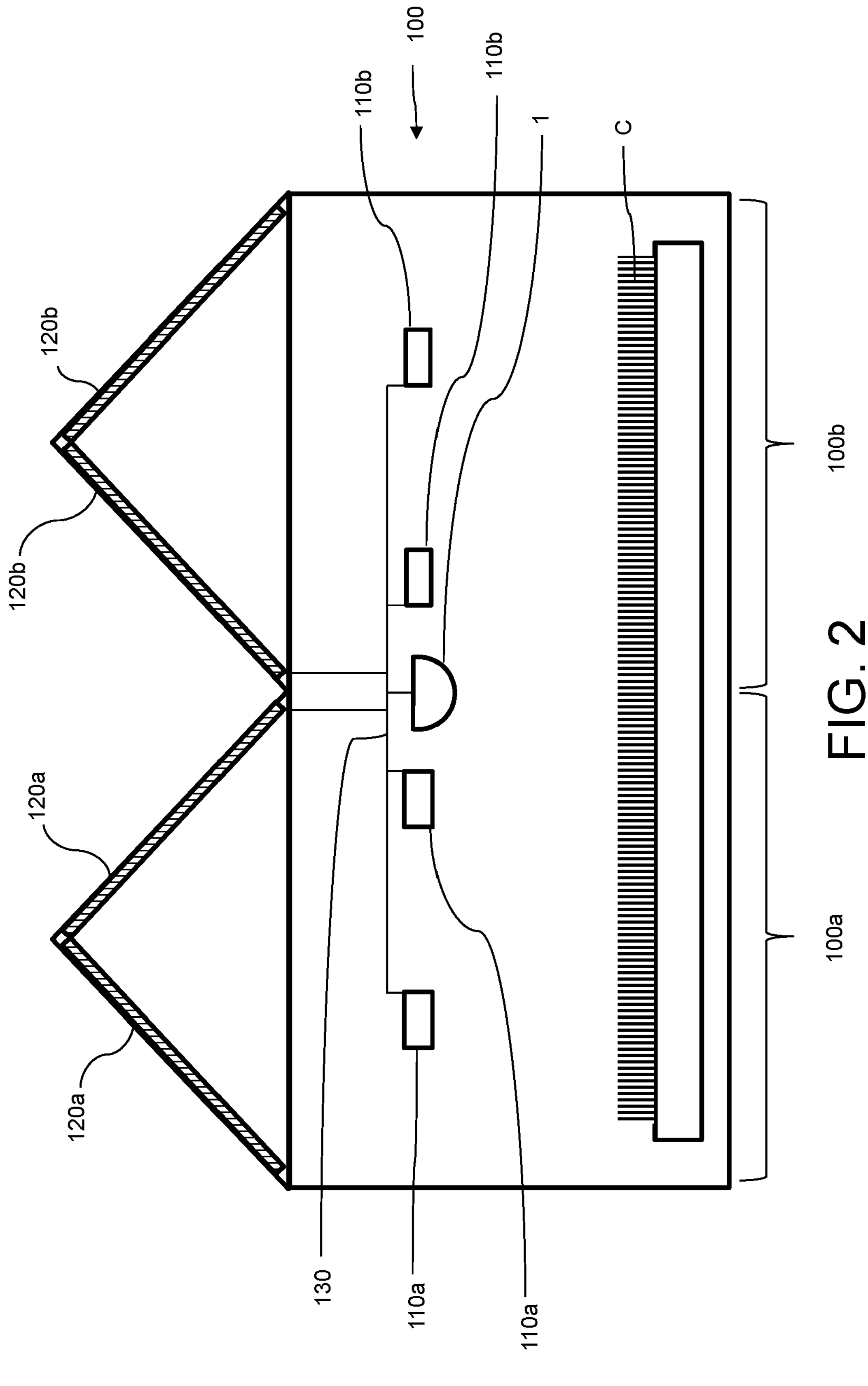


FIG. 2

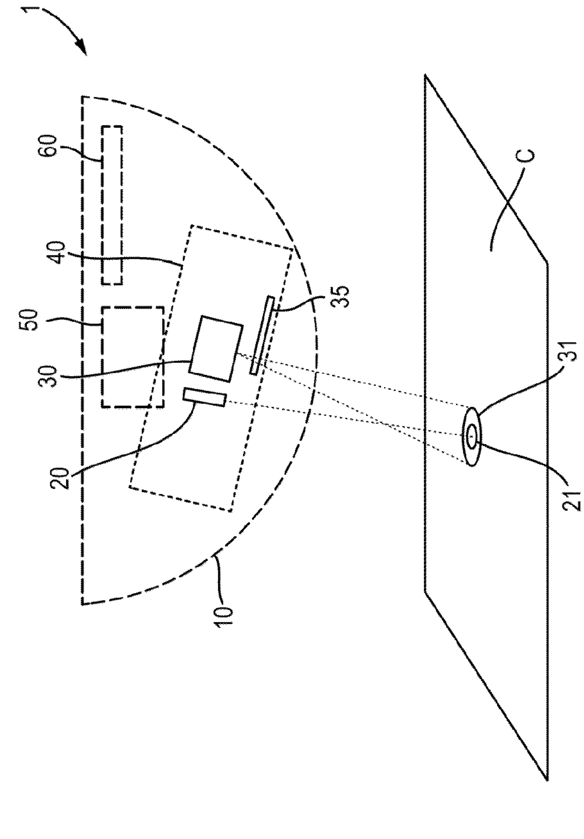


FIG. 3

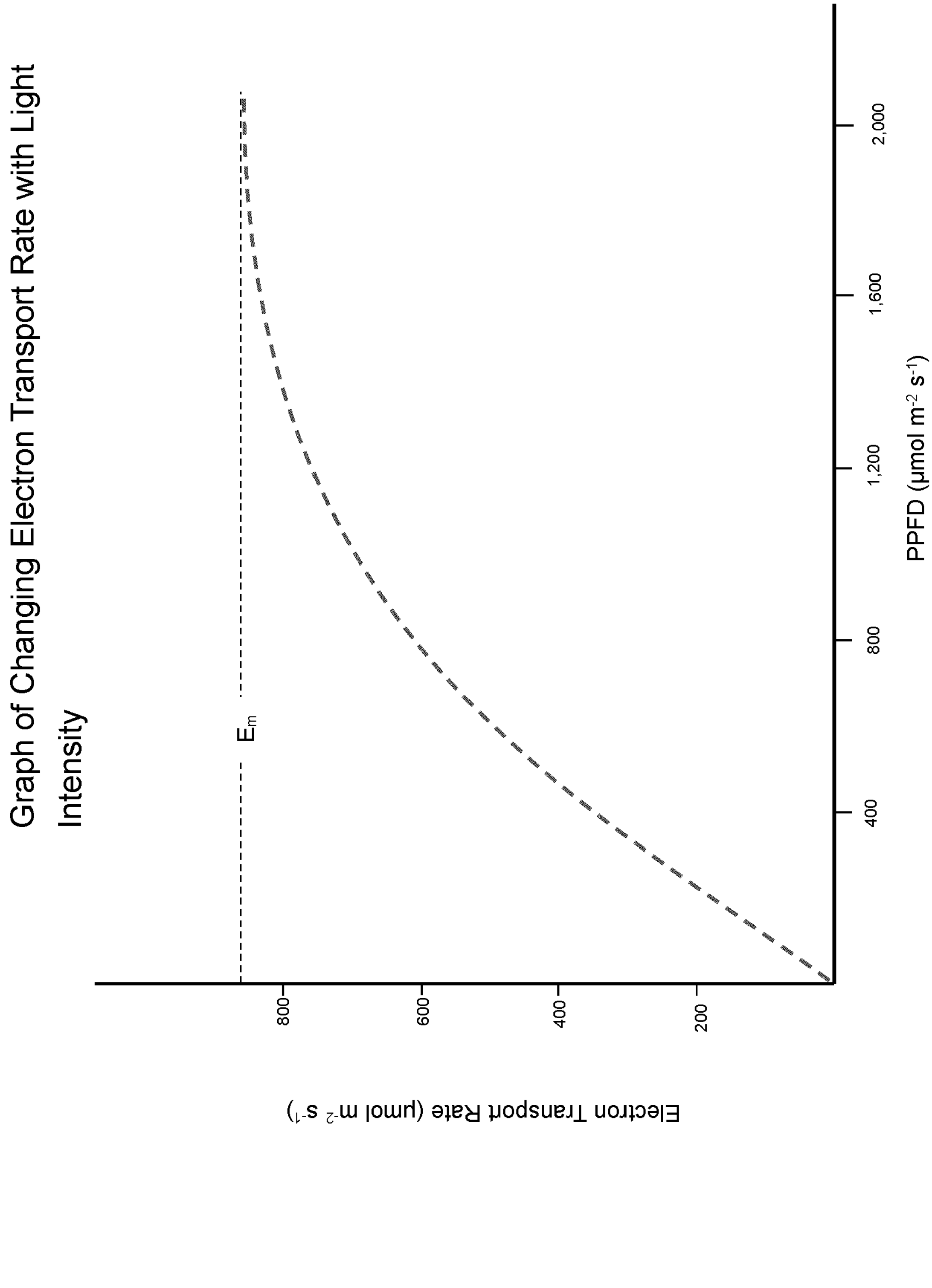
Graph of Changing Electron Transport Rate with Light Intensity
Electron Transport Rate (µmol m-2 s-1)
200
400
600
800
Em
400
800
1,200
1,600
2,000
PPFD (µmol m-2 s-1)

FIG. 4

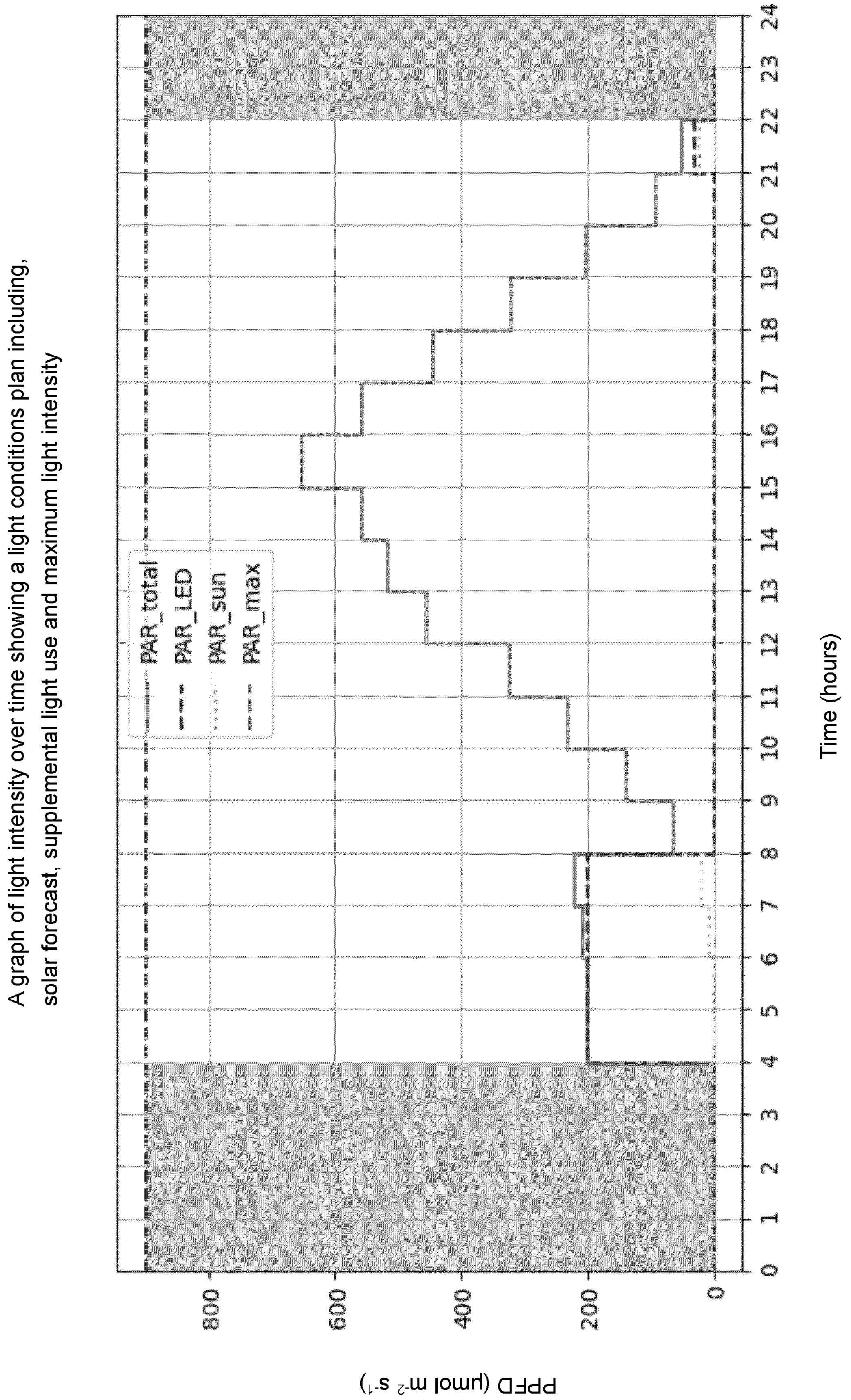
A graph of light intensity over time showing a light conditions plan including, solar forecast, supplemental light use and maximum light intensity
PAR_total
PAR_LED
PAR_sun
PAR_max
PPFD (µmol m$^{-2}$ s$^{-1}$)
0
200
400
600
800
Time (hours)
0 1 2 3 4 5 6 7 8 9 10 11 12 13 14 15 16 17 18 19 20 21 22 23 24

FIG. 5

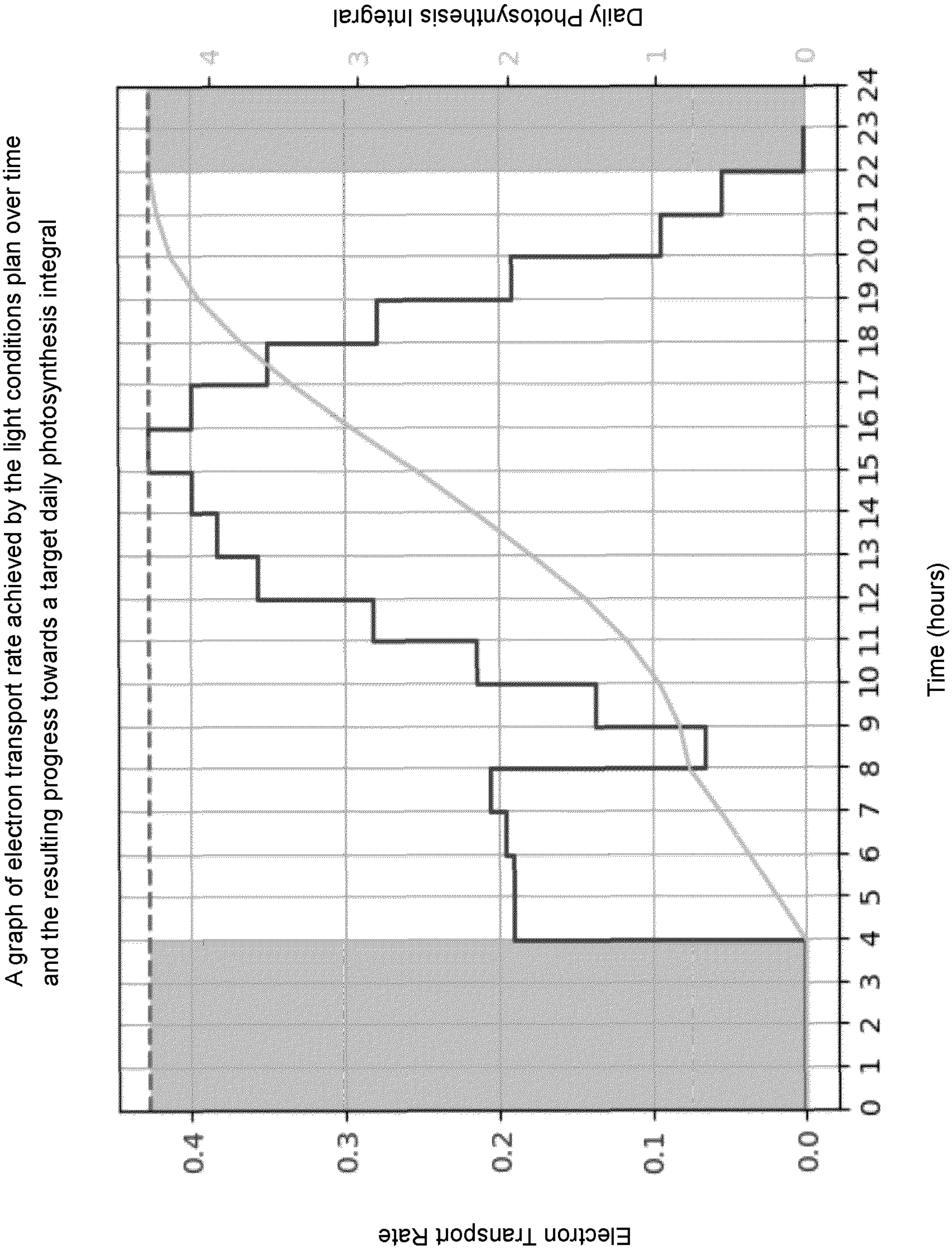
A graph of electron transport rate achieved by the light conditions plan over time
and the resulting progress towards a target daily photosynthesis integral
Electron Transport Rate
0.0
0.1
0.2
0.3
0.4
Daily Photosynthesis Integral
0
1
2
3
4
Time (hours)
0 1 2 3 4 5 6 7 8 9 10 11 12 13 14 15 16 17 18 19 20 21 22 23 24

FIG. 6

A graph of light intensity over time showing a light conditions plan including, solar forecast, supplemental light use and maximum light intensity

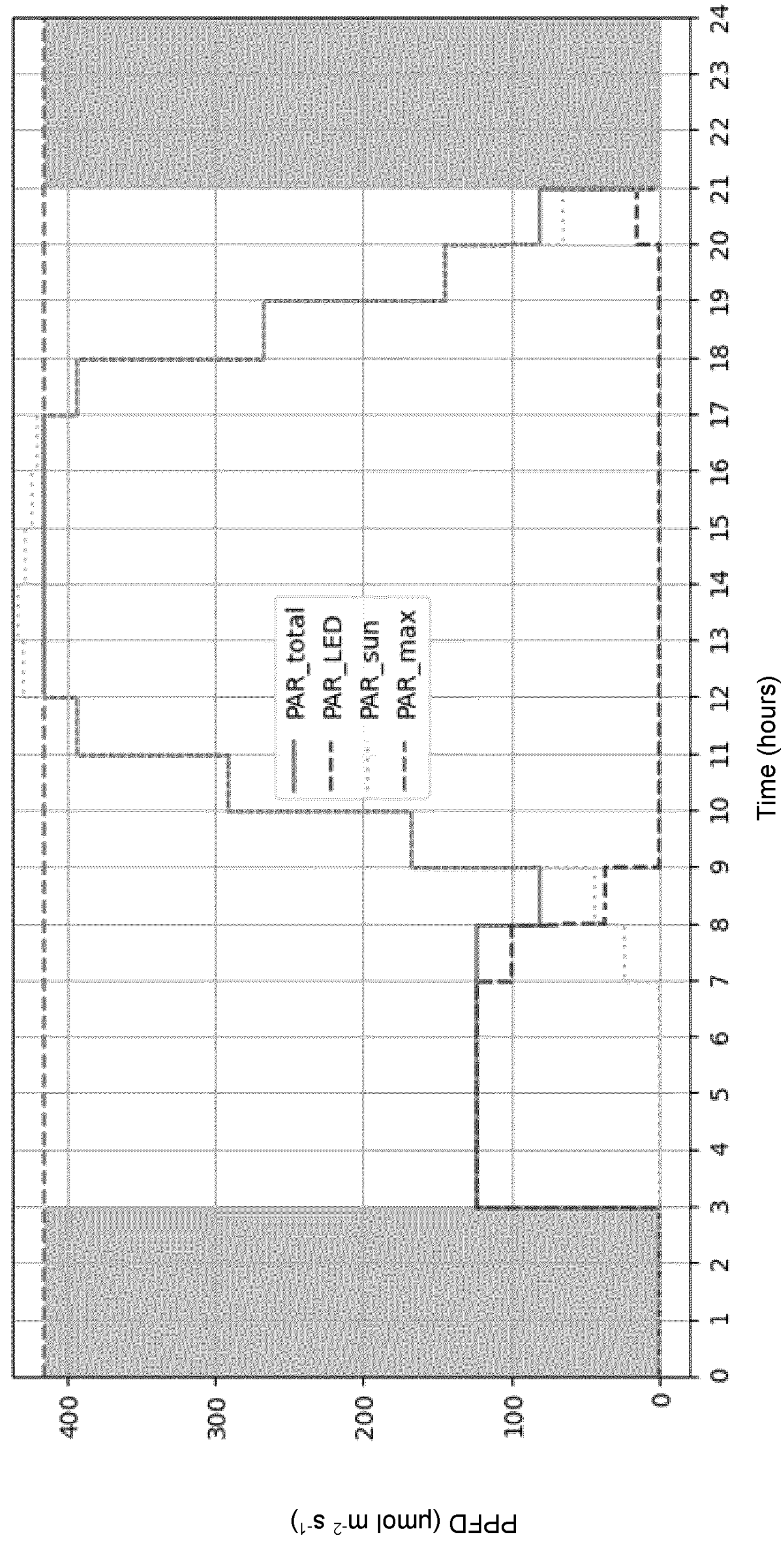


FIG. 7

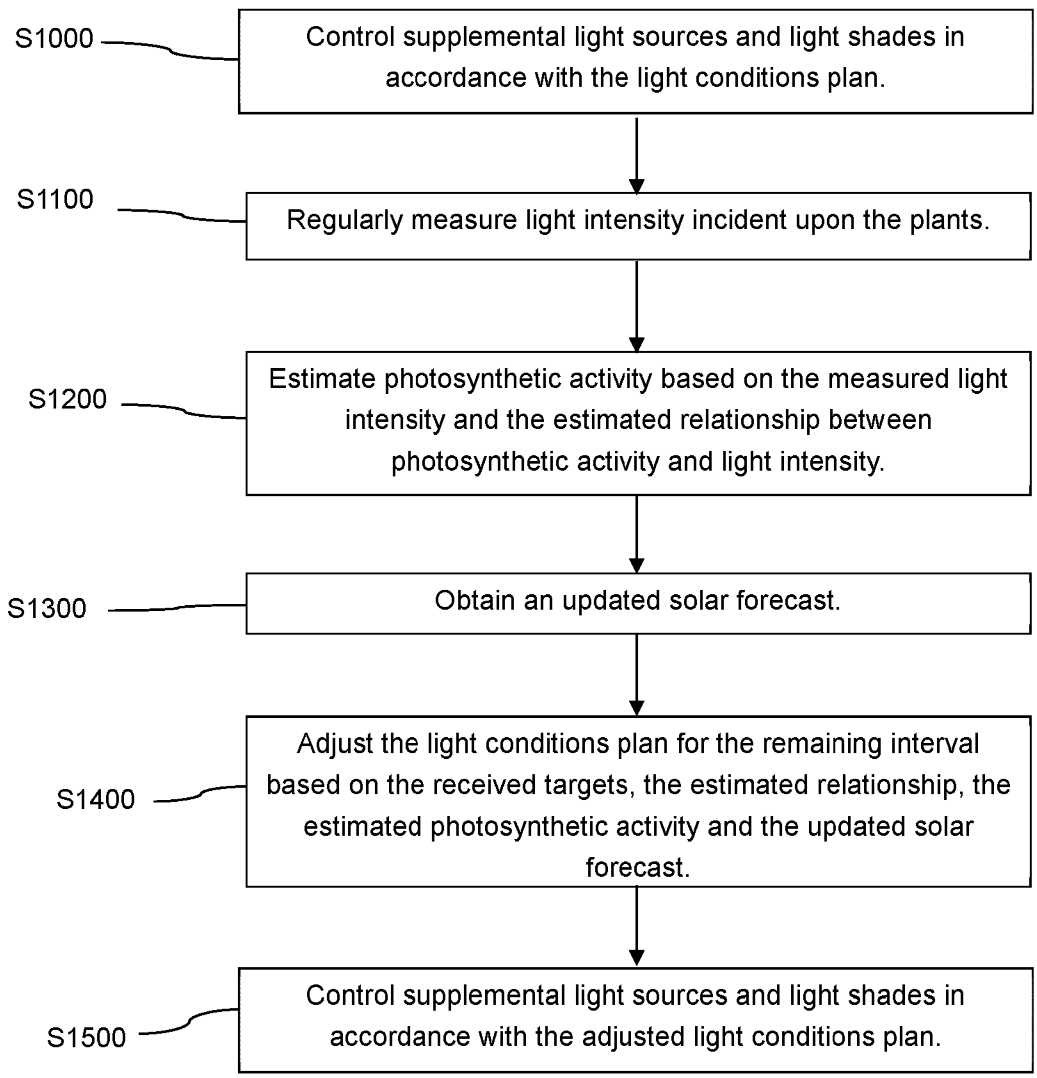
S1000
Control supplemental light sources and light shades in accordance with the light conditions plan.
S1100
Regularly measure light intensity incident upon the plants.
S1200
Estimate photosynthetic activity based on the measured light intensity and the estimated relationship between photosynthetic activity and light intensity.
S1300
Obtain an updated solar forecast.
S1400
Adjust the light conditions plan for the remaining interval based on the received targets, the estimated relationship, the estimated photosynthetic activity and the updated solar forecast.
S1500
Control supplemental light sources and light shades in accordance with the adjusted light conditions plan.

FIG. 8

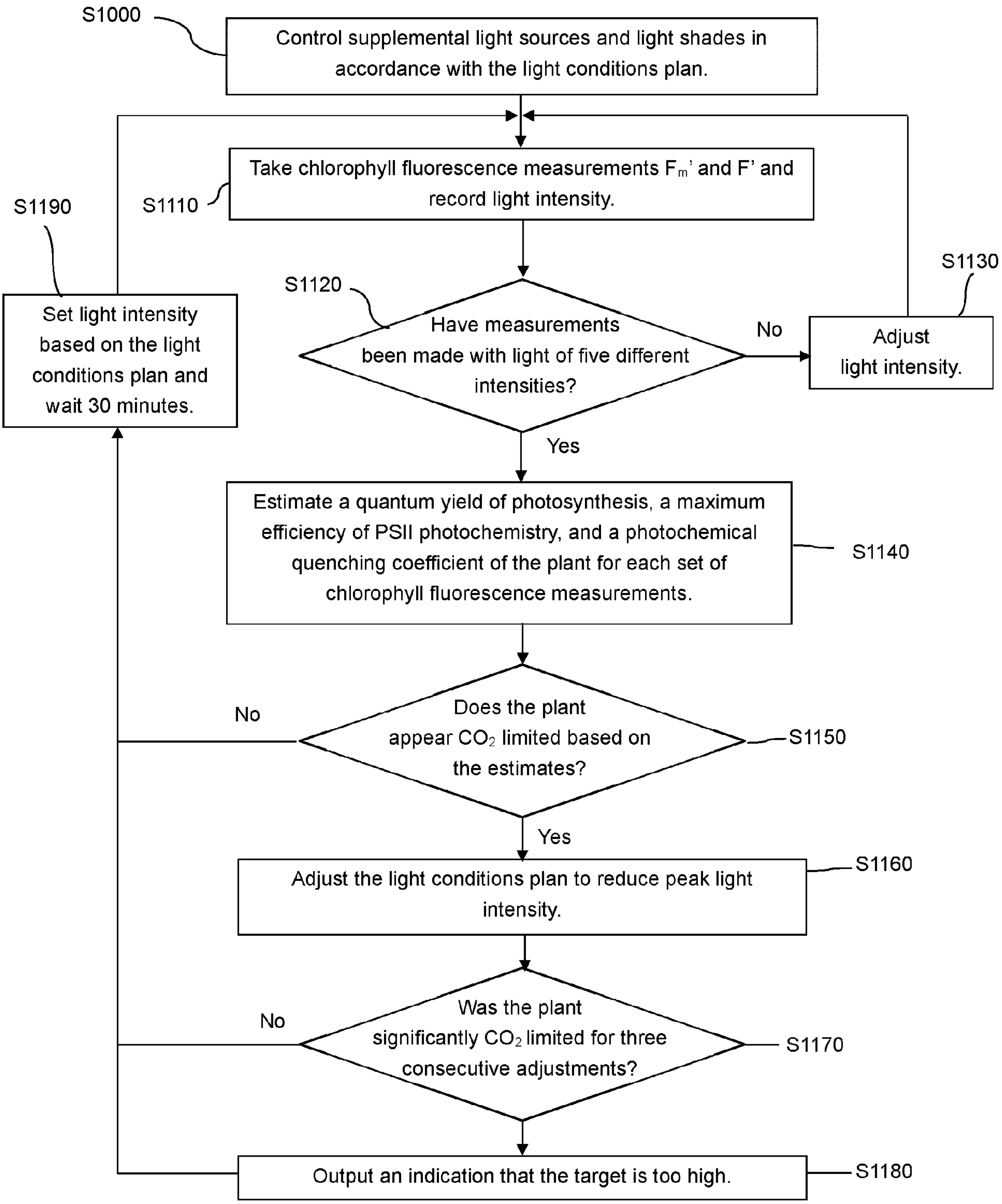
S1000
Control supplemental light sources and light shades in accordance with the light conditions plan.
S1110
Take chlorophyll fluorescence measurements $F_m$' and F' and record light intensity.
S1120
Have measurements been made with light of five different intensities?
No
S1130
Adjust light intensity.
Yes
S1190
Set light intensity based on the light conditions plan and wait 30 minutes.
Estimate a quantum yield of photosynthesis, a maximum efficiency of PSII photochemistry, and a photochemical quenching coefficient of the plant for each set of chlorophyll fluorescence measurements.
S1140
Does the plant appear $CO_2$ limited based on the estimates?
S1150
No
Yes
Adjust the light conditions plan to reduce peak light intensity.
S1160
Was the plant significantly $CO_2$ limited for three consecutive adjustments?
S1170
No
Output an indication that the target is too high.
S1180

FIG. 9

Europäisches Patentamt
European Patent Office
Office européen des brevets

# EUROPEAN SEARCH REPORT

Application Number
EP 24 19 9405

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2024/196810 A1 (WIK TORSTEN [SE] ET AL) 20 June 2024 (2024-06-20)<br>* the whole document *<br>----- | 1-15 | INV.<br>A01G7/04<br>A01G9/22<br>A01G9/24 |
| Y | US 2016/366833 A1 (POHJANVOURI TIMO [SE] ET AL) 22 December 2016 (2016-12-22)<br>* paragraph [0037]; figure 1 *<br>----- | 1-15 | |

TECHNICAL FIELDS SEARCHED (IPC)

A01G

The present search report has been drawn up for all claims

2

| Place of search | Date of completion of the search | Examiner |
|---|---|---|
| The Hague | 18 February 2025 | Weinmüller, C |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 19 9405

This annex lists the patent family members relating to the patent documents cited in the above-mentioned European search report. The members are as contained in the European Patent Office EDP file on
The European Patent Office is in no way liable for these particulars which are merely given for the purpose of information.

18-02-2025

| Patent document cited in search report | Publication date | Patent family member(s) | Publication date |
|---|---|---|---|
| US 2024196810 A1 | 20-06-2024 | CA 3215122 A1 | 20-10-2022 |
| | | EP 4074164 A1 | 19-10-2022 |
| | | US 2024196810 A1 | 20-06-2024 |
| | | WO 2022218929 A1 | 20-10-2022 |
| US 2016366833 A1 | 22-12-2016 | CA 2914471 A1 | 15-01-2015 |
| | | CN 105407706 A | 16-03-2016 |
| | | DK 3018997 T3 | 17-06-2019 |
| | | EP 2823703 A1 | 14-01-2015 |
| | | EP 3018997 A1 | 18-05-2016 |
| | | JP 6509839 B2 | 08-05-2019 |
| | | JP 2016526890 A | 08-09-2016 |
| | | KR 20160028439 A | 11-03-2016 |
| | | US 2016366833 A1 | 22-12-2016 |
| | | WO 2015004179 A1 | 15-01-2015 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2024125899 A1
- WO 2023031612 A1
- WO 2024100029 A1